(19) **Europäisches Patentamt / European Patent Office / Office européen des brevets**

(11) **EP 1 746 404 B1**

(12) ## EUROPÄISCHE PATENTSCHRIFT

(45) Veröffentlichungstag und Bekanntmachung des Hinweises auf die Patenterteilung:
**11.01.2012 Patentblatt 2012/02**

(51) Int Cl.:
*G01M 13/04* (2006.01)  *G01M 13/02* (2006.01)
*G01H 1/00* (2006.01)

(21) Anmeldenummer: **06018548.5**

(22) Anmeldetag: **09.08.2000**

(54) **Verfahren und Vorrichtung zum Ermitteln von Schäden an sich zyklisch bewegenden Maschinenelementen**

Procedure and device for determining damages of cyclically moving machine elements

Procédé et dispositif de détermination d'endommagements de pièces de machine à mouvement cyclique

(84) Benannte Vertragsstaaten:
**AT BE CH CY DE DK ES FI FR GB GR IE IT LI LU MC NL PT SE**

(30) Priorität: **16.08.1999 DE 19938721**

(43) Veröffentlichungstag der Anmeldung:
**24.01.2007 Patentblatt 2007/04**

(62) Dokumentnummer(n) der früheren Anmeldung(en) nach Art. 76 EPÜ:
**00117089.3 / 1 077 372**

(73) Patentinhaber: **Prüftechnik Dieter Busch AG 85737 Ismaning (DE)**

(72) Erfinder:
• **Lysen, Heinrich**
 **85748 Garching (DE)**
• **Franke, Dieter**
 **01129 Dresden (DE)**

(56) Entgegenhaltungen:
**EP-A- 0 413 845**  **WO-A-99/25921**
**DE-A- 19 702 234**  **JP-A- 10 209 889**
**JP-A- 57 067 310**  **JP-A- 60 039 365**
**US-A- 4 007 630**  **US-A- 4 931 949**
**US-A- 5 109 700**

EP 1 746 404 B1

## Beschreibung

Die vorliegende Erfindung betrifft ein Verfahren und eine Vorrichtung zum Ermitteln von Schäden an sich zyklisch bewegenden Maschinenelementen, insbesondere Wälzlagern oder Getrieben, sowie Verfahren und eine Vorrichtung zur Separation von periodischen Signalanteilen aus einem Signal, insbesondere zur Ermittlung von Schäden an sich zyklisch bewegenden Maschinenelementen.

Eine übersicht über Vorrichtungen und Verfahren zur Ermittlung von Schäden an sich zyklisch bewegenden Maschinenelementen mittels Analyse eines durch die Bewegung verursachten und von einem Sensor aufgenommenen Schwingungssignal findet sich in "Schwingungsdiagnostische Beurteilung von Maschinen und Anlagen" von Ulrich Klein, herausgegeben vom Verein für Betriebsfestigkeitsforschung, Verlag Stahl - Eisen, Düsseldorf 1998, siehe insbesondere Kapitel 6.1, wo die Schwingungsanalyse von Wälzlagern diskutiert wird. Die übliche Vorgehensweise besteht darin, daß ein Schwingungssensor fest an das Lager oder ein entsprechendes Maschinengehäuse angekoppelt wird, dessen Signal verstärkt wird, wobei das verstärkte Schwingungssignal einer Hüllkurvenbildung, beispielsweise mittels Bandpaßfilterung, Gleichrichtung und anschließender Tiefpaßfilterung, unterzogen wird und das Frequenzspektrum des Hüllkurvensignals gebildet wird, welches schließlich analysiert wird, um Rückschlüsse auf Schäden in dem Wälzlager zu ziehen. Es sind jedoch auch Bewertungsverfahren im Zeitbereich bekannt, wie beispielsweise Analyse der Hüllkurve im Zeitbereich, Schwingstärkeanalyse, sowie statistische Analyse des Zeitsignals.

Beispiele für die Auswertung des Hüllkurvensignals im Zeitbereich finden sich in US 4 007 630 und US 3 554 012, wobei in beiden Fällen im wesentlichen die Amplituden analysiert werden. Ferner ist ein Verfahren bekannt, bei welchem relative Extremwerte des bandpaßgefilterten, gleichgerichteten und tiefpaßgefilterten Schwingungssignals ermittelt und gespeichert werden, wobei der Intensitätswert eines jeden registrierten Ereignisses mit dem vorher registrierten multipliziert wird und die entsprechenden Produktwerte und die zugrundeliegenden Zeitdifferenzen einer Häufigkeitsanalyse zugeführt werden. Die erhaltene Häufigkeitsverteilung wird dann nach vorgegebenen Kriterien einer Mustererkennung unterzogen. Weiter ist aus der DE 197 02 234 A1 ein Verfahren zur Analyse von Frequenzspektren an bewegten Maschinenteilen bekannt. Dort werden keine Zeitsignale analysiert. In der WO 99/25921 werden Schwingungssignale durch Vergleich miteinander oder mit einem Signal eines Drehzahl- bzw. Geschwindigkeitsmessers auf das Vorliegen von Defekten analysiert.

Reine Frequenzanalyse-Verfahren haben den inhärente Nachteil, daß nur ein Teil der im ursprünglichen Zeitsignal enthaltenen Information im Spektrum enthalten ist und ausgewertet werden kann.

Bei einer Analyse eines Zeitsignals von sich zyklisch bewegenden Maschinenelementen stellt sich das Problem, daß dem interessierenden Signal, beispielsweise den von einem Außenringschaden bei einem Wälzlager herrührenden Anregungen, die mit der Außenring-Überrollfrequenz auftreten, in der Regel eine Vielzahl von Signalen mit anderen Periodizitäten bzw. Frequenzen, z.B. der Rotationsfrequenz der Welle, überlagert sind, so daß diese Signale selbst nach einer Hüllkurvenbildung im Zeitbereich nur schwer zu erkennen sind. Ein weiteres Problem besteht darin, daß die Periodizität des interessierenden Signalanteils oft gar nicht genau bekannt ist. So hängt beispielsweise bei einem Radiatwälzlager die Überrollfrequenz des Außenrings nicht nur von der Drehzahl der Welle, sondern auch von dem Druckwinkel, d.h. von der Axialbelastung des Lagers, ab.

Es ist eine Aufgabe der vorliegenden Erfindung, ein Verfahren bzw. eine Vorrichtung zur Ermittlung von Schäden an sich zyklisch bewegenden Maschinenelementen zu schaffen, welches eine vollständigere Analyse der in einem durch die Bewegung der Maschinenelemente verursachten Signal enthaltenen Informationen ermöglicht als bisher. Es ist auch Aufgabe der vorliegenden Erfindung, ein wirksames und flexibles Verfahren zur Separation von periodischen Signalanteilen aus einem Signal sowie eine entsprechende Vorrichtung zu schaffen.

Die Aufgabe wird erfindungsgemäß gelöst durch ein Verfahren gemäß Anspruch 1 bzw. 3 sowie eine Vorrichtung gemäß Anspruch 6.

Bei der erfindungsgemäßen Lösung der Aufgabe gemäß Anspruch 1, 3 bzw. 7 ist vorteilhaft, daß durch die Separation eines Signalanteils mit einer einstellbaren Periode eine genauere und vollständigere Analyse des Signals möglich ist, da sich beispielsweise verschiedene Maschinenelemente durch unterschiedliche charakteristische Periodendauern unterscheiden, in welchen signifikante Schadenssignale zu erwarten sind. So treten beispielsweise bei einem Wälzlager die von Außenringschäden, Wälzkörperschäden und Innenringschäden verursachten Signalanteile in der Regel mit unterschiedlichen Die Dokumente US 5,109,700 und US 4,931,949 zeigen Verfahren zur Ermittlung von Schäden an sich zyklisch bewegenden Maschinenelementen, wobei ein Sensor ein Signal aufnimmt, aus dem ein Anteil mit einstellbarer Periode separiert wird. Ein rotierender Ringspeicher für das Signal ist nicht vorgesehen.

Periodendauern auf. Eine erfindungsgemäß mögliche Trennung dieser Signalanteile erlaubt dann eine detailliertere Schadensanalyse.

Die Speicherelemente wirken vorzugsweise jeweils als Tiefpaß für das Eingangssignal, wobei diese Wirkung digital nachgebildet sein kann. Vorzugsweise ist der Ringspeicher digital ausgebildet, wobei die Speicherelemente als zyklisch adressierte Akkumulatoren ausgebildet sind. Die Frequenzanpassung der Ringspeicherrotation kann einerseits dadurch erfolgen, daß die Periodendauer der gesuchten Signalanteile aus dem Signal ermittelt wird, beispielsweise mittels Suchton-Analyse, Fourier-Transformation oder Cepstrum-Analyse, und der dem Speicher mit der so ermittelten Frequenz rotiert wird. Alternativ kann die Rotation des Ringspeichers direkt mit dem Eingangssignal synchronisiert werden, wobei dies beispielsweise mittels eines Phasenreglers erfolgen kann, wobei die Inhalte der Speicherelemente mit der Ableitung des Eingangssignals multipliziert werden und das Ergebnis aufakkumuliert wird und zu bestimmten Zeitpunkten die Rotationsfrequenz des Ringspeichers entsprechend dem aufakkumulierten Wert geändert wird. Vorzugsweise wird dabei die Form des Eingangssignals für die Synchronisierung bearbeitet, wobei es sich um eine Tiefpaßfilterung handeln kann oder es werden aus dem Eingangssignal mittels eines weiteren rotierenden Ringspeichers Anteile entfernt, die nicht die Periodendauer der gesuchten Signalanteile haben.

Vorzugsweise werden die erfindungsgemäßen Lösungen für die Schwingungsanalyse von Maschinenelementen verwendet, wobei es sich beispielsweise um Wälzlager, Getriebe oder um Walzen zur kontinuierlichen Herstellung eines Produkts, welche die Oberfläche des Produkts prägen, handeln kann. Im Falle der Verwendung für ein Wälzlager wird vorzugsweise dein Außenring, dem Innenring und/oder den Wälzkörpern jeweils ein Periodenformfilter zugeordnet, dessen Rotationsfrequenzen der Außenring-Überrollfrequenz, der Innenring-Überrollfrequenz bzw. der Wälzkörper-Überrollfrequenz entsprechen. Vorzugsweise wird dabei das Ausgangssignal der jeweils anderen Perioden form filter von dem Signal abgezogen, bevor es dem jeweiligen Periodenformfilter als Eingangssignal zugeführt wird, um Signalanteile zu entfernen, welche die "falsche" Periodizität haben. Vorzugsweise ist dabei ein weiteres Periedenformfilter vorgesehen, welches auf die Drehzahl der Welle synchronisiert ist und dessen Ausgangssignal von dem Signal abgezogen wird, bevor es den anderen Periodenformfiltern als Eingangssignal zugeführt wird. Ferner kann die zeitliche Veränderung des Inhalts des Ringspeichers der Periodenformfilter für den Außenring, den Innenring bzw. die Wälzkörper analysiert werden, um eine auf das Lager wirkende Unwucht bzw. Gleichlast zu ermitteln. Die Summe aus Gleichlast und Unwucht kann dabei ermittelt werden, indem bei dem Ausgangssignal des Wälzkörper-Periodenformfilters das Verhältnis zwischen den Amplituden der von dem Innenringkontakt und dem Außenringkontakt herrührenden Signalanteile gebildet wird.

Ferner können die Periodenformfilter auch verwendet werden, um aus der Rotationsfrequenz der Ringspeicher die Überrollfrequenzen des Außenrings, des Innenrings und der Wälzkörper und daraus den Druckwinkel bzw. Kontaktwinkel des Wälzlagers zu ermitteln. Statt eines gemeinsamen Periodenformfilter für alle Wälzkörper kann auch jedem Wälzkörper einzeln ein Periodenformfilter zugeordnet sein.

Um einem eventuellen Schlupf der Wälzkörper außerhalb des Lastbereichs zu begegnen, sollte die Güte des Wälzkörper-Periodenformfilters so eingestellt werden, daß es innerhalb eines Käfigumlaufs einschwingt. Dabei kann bei jedem Käfigumlauf ein eigenes Abbild des Inhalts des Ringspeichers erzeugt werden, wobei die Phasenverschiebung verschiedener Abbilder ermittelt wird und die Abbilder hinsichtlich dieser Phasenverschiebung korrigiert und dann addiert werden, um das Ausgangssignal zu bilden. Alternativ kann die Phase der Rotation des Ringspeichers des Wälzkörper-Periodenformfilters entsprechend dem ermittelten Schlupfwinkel gesteuert werden, um den Wälzkörperschlupf zu kompensieren. In diesem Fall ist keine phasenversetzte Addition von einzelnen Abbildern erforderlich. Wenn weder eine Phasenkorrektur der Signale bzw. Abbilder noch eine Phasenkorrektur der Rotation des Ringspeichers vorgenommen wird, kann der dann unbekannte Wälzkörperschlupf kompensiert werden, indem das Ausgangssignal des Periodenformfilters für die Wälzkörper nach seiner Amplitude sortiert wird, woraus dann die Schadenslänge für die Wälzkörper ermittelt werden kann.

Weitere bevorzugte Ausgestaltungen der Erfindung ergeben sich aus den Unteransprüchen.

Im folgenden wird die vorliegende Erfindung anhand der beigefügten Zeichnungen detaillierter erläutert, wobei

Fig. 1    ein analoges Ersatzschaltbild eines erfindungsgemäßen Periodenformfilters zeigt;

Fig. 2    schematisch ein erfindungsgemäßes Wälzlager-Diagnosesystem zeigt;

Fig. 3    einen beispielhaften Verlauf des Ausgangssignals eines Periodenformfilters aus Fig. 2 zeigt;

Fig. 4    einen beispielhaften Verlauf des Ausgangssignals eines Wälzkörper-Periodenformfilters aus Fig. 2 zeigt;

Fig. 5    einen beispielhaften Verlauf des Ausgangssignals eines Wälzkörper-Periodenformfilters aus Fig. 2 nebst entsprechendem amplitudensortierten Signalverlauf und Häufigkeitsverteilung zeigt;

Fig. 6    schematisch ein Getriebeüberwachungssystem zeigt;

Fig. 7    schematisch ein Überwachungssystem für eine Drahtziehanlage zeigt;

Fig. 8    schematisch ein Überwachungssystem für rotierende Objekte einschließlich einer symbolischen Darstellung der Verknüpfung der dabei verwendeten Periodenformfilter für ein Wälzlager zeigt;

Fig. 9 einen Vorschlag für eine symbolische Darstellung von Periodenformfiltern zeigt;

Fig. 10 eine andere Ausführungsform eines erfindungsgemäßen Periodenformfilters zeigt;

Fig. 11 eine schematische Ansicht der Anzeige eines Multiperioden-Signalanlysators zeigt;

Fig. 12 beispielhaft im Polardiagramm das Ausgangssignal eines Periodenformfilters zeigt, der auf die Käfigrotationsperiode eines Wälzlagers synchronisiert ist;

Fig. 13 beispielhaft im Polardiagramm das entsprechende Ausgangssignal eines Periodenformfilters zeigt, der auf die Außenringüberollperiode synchronisiert ist;

Fig. 14 in linearer Darstellung das Signal von Fig. 13 (Kurve A) und ein zusätzliches Außenringschadenssignal (Kurve B) zeigt; und

Fig. 15 eine Abwandlung der in Fig. 10 dargestellten Ausführungsform zeigt.

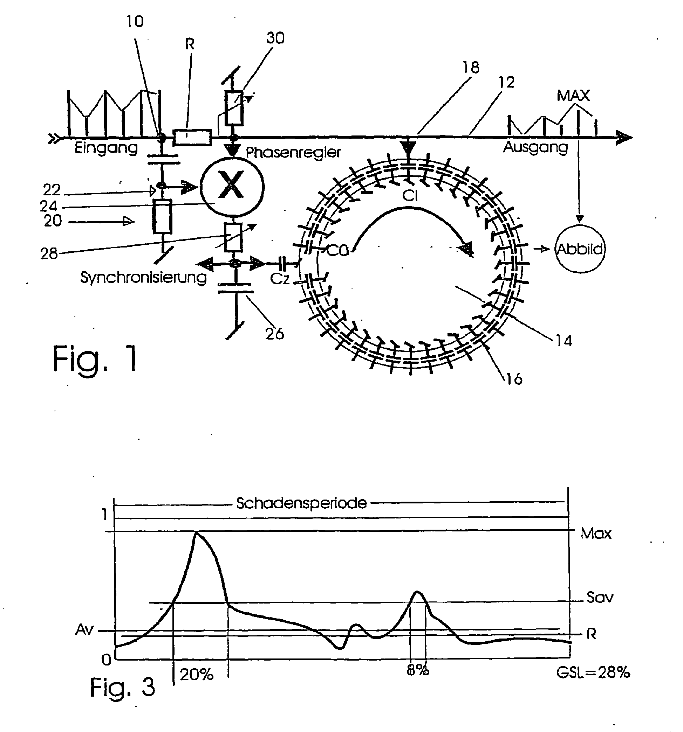

In Fig. 1 ist schematisch ein analoges Ersatzschaltbild einer Vorrichtung zur Separation von periodischen Signalanteilen aus einem Signal gezeigt, welche im folgenden als "Periodenformfilter" bezeichnet wird. Die wesentliche Funktion eines solchen Periodenformfilters besteht darin, aus einem Zeitsignal, das am Eingang 10 anliegt, alle Signalanteile zu separieren, die eine bestimmte Periodizität bzw. Periodendauer aufweisen, und am Ausgang 12 auszugeben. Das wesentliche Element eines solchen Periodenformfilters ist dabei ein Ringspeicher 14, der eine Mehrzahl von zyklisch angeordneten Speicherelementen 16 aufweist und mit einer steuer- bzw. regelbaren Umlaufperiode bzw. -frequenz "rotiert". Damit ist gemeint, daß die Speicherelemente 16 entsprechend der "Rotations"-Frequenz nacheinander jeweils mit dem Eingang 10 über einen Koppelknoten 18 verbunden werden. Das Signal an dem Ausgang 12 wird im gezeigten Ausführungsbeispiel ebenfalls dadurch erzeugt, daß der Ausgang 12 entsprechend der Rotationsfrequenz des Ringspeichers 14 über den Koppelknoten 18 mit den einzelnen Speicherelementen 16 verbunden wird. Diese Ein- bzw. Auskoppelung muß aber nicht über den gleichen Koppelknoten 18 erfolgen, sondern es können auch zwei getrennte Koppelknoten für den Eingang und den Ausgang vorgesehen sein.

Der Begriff "Rotation" ist bzgl. des Ringspeichers allgemein auf die Zugriffsabfolge der Speicherelemente zu beziehen und bedeutet keineswegs, daß die Speicherelemente etwa physikalisch rotieren müssen. Vielmehr ist gemeint, daß auf die Speicherelemente zyklisch mit einer bestimmten Zyklusdauer zugegriffen wird, d.h. diese mit dem Eingang verbunden werden, wobei sich ein Zyklus nahtlos an den nächsten anschließt.

Jedes einzelne Speicherelement 16 wirkt als Tiefpaß für das jeweils gerade anliegende Eingangssignal, wobei in Fig. 1 die Speicherelemente 16 als Kapazitäten C dargestellt sind, die mit einem in den Eingangspfad geschalteten Widerstand R jeweils einen Tiefpaß bilden. Wenn man annimmt, daß in dem Beispiel von Fig. 1 Z Speicherelemente 16 in dem Ringspeicher 14 enthalten sind, dann wirkt der Periodenformfilter insgesamt als Tiefpaß mit einer Zeitkonstante $\tau = Z \cdot R \cdot C$.

Die grundlegende Funktionsweise des Periodenformfilters sei an folgendem einfachen Beispiel erläutert. Wenn an dem Eingang ein Signal anliegt, das neben einem Signalanteil mit einer Periode T weitere Signalanteile aufweist, die entweder nichtperiodisch sind oder eine von T abweichende Periodendauer aufweisen, dann bewirkt eine Rotation des Ringspeichers 14 mit der Umdrehungsdauer T, daß bei bestehender Phasensynchronisierung Ereignisse mit der Periodendauer T bei jedem Umlauf des Ringspeichers 14 auf das gleiche Speicherelement 16 treffen und dessen Inhalt allmählich anwachsen lassen (im Beispiel von Fig. 1 erhöht sich dabei jeweils die in der entsprechenden Kapazität C gespeicherte Ladung und damit die abgreifbare Spannung). Ereignisse dagegen, welche nicht die Periodizität T aufweisen, treffen bei jedem Umlauf des Ringspeichers 14 auf verschiedene Speicherelemente 16 und werden auf diese Weise aus dem Eingangssignal "herausgemittelt" bzw. tragen nur zu einem gleichmäßigen Untergrund bei. Nach einer bestimmten Anzahl von Umdrehungen des Ringspeichers 14, die von der Güte des durch den Ringspeicher 14 gebildeten Tiefpasses abhängt, ist im Ringspeicher 14 in Form der in den Speicherelementen 16 gespeicherten Ladung bzw. Spannung im wesentlichen nur eine Abbildung des Signalanteils mit der Periodendauer T enthalten, so daß an dem Ausgang 12 im wesentlichen nur noch dieser Signalanteil erscheint, während die übrigen Signalanteile ausgefiltert wurden. Sobald das Periodenformfilter vollständig "eingeschwungen" ist, d.h. sobald das Signal an dem Ausgang 12 einen bestimmten Schwellwert überstiegen hat oder ein Maximum erreicht hat, wird der Inhalt des Ringspeichers 14 nach außen abgebildet, d.h. in einem statischen Speicher gespeichert.

Ein wesentliches Erfordernis für die Wirksamkeit des Periodenformfilters ist die Wahl der richtigen Rotationsfrequenz des Ringspeichers 14, wobei nur dann eine optimale Separation eines gesuchten Signalanteils mit einer Periodendauer T erzielt wird, wenn die Rotationsperiode des Ringspeichers 14 mit dieser gesuchten Periode T übereinstimmt. Ein Problem dabei ist, daß die gesuchte Periodendauer T entweder nicht oder nicht genau bekannt ist oder nicht konstant ist. Eine Möglichkeit zur Lösung dieses Problems besteht darin, die gesuchte Periodendauer beispielsweise mittels einer Suchton-Analyse oder einer Fourier-Analyse, z.B. mittels Suche nach Grund- und Oberwellen mittels Cepstrum-Analyse, zu ermitteln und die Rotationsfrequenz des Ringspeichers 14 entsprechend zu steuern. Diese Lösung ist insbesondere für eine im wesentlichen konstante gesuchte Periodendauer geeignet, wobei jedoch die beschriebene Analyse des Eingangssignals auch kontinuierlich oder in bestimmten Wiederholabständen ausgeführt werden kann.

Grundsätzlich, insbesondere bei variierender gesuchter Periodendauer, ist es auch möglich und günstig, die Rotation des Ringspeichers 14 mittels einer Regelung direkt mit dem Eingangssignal zu synchronisieren. Dies kann beispielsweise gemäß Fig. 1 mittels einer Synchronisierungs-Einrichtung 20 erfolgen, welche einen Differenzierer 22 aus einer Kapazität und einem Widerstand, einen Multiplizierer 24 sowie einen Akkumulator 26 umfaßt. Dabei werden die Inhalte der Speicherelemente 16 mittels des Koppelknotens 18 der als Phasenregler wirkenden Synchronisierungs-Einheit 20 zugeführt und mittels des Multiplizierers 24 mit dem durch den Differenzierer 22 abgeleiteten Eingangssignal multipliziert, wobei das Ergebnis in dem Akkumulator 26 aufakkumuliert wird. Der Inhalt dieses Akkumulators wird dann verwendet, um zu bestimmten Zeitpunkten die Rotationsfrequenz des Ringspeichers 14 entsprechend zu verändern. Dies kann z.B. dadurch geschehen, daß zu bestimmten Zeitpunkten die Rotationsfrequenz um einen Wert, der proportional zu dem Inhalt des Akkumulators 26 ist, erhöht bzw. erniedrigt wird, wobei die Proportionalitäts-Konstante so gewählt wird, daß der Regelkreis stabil ist. Als Zeitpunkt kann dabei beispielsweise jeder n-te-Umlauf des Ringspeichers 14 gewählt werden. Der Proportionalitäts-Faktor ist mittels eines bei 28 angedeuteten variablen Widerstands einstellbar.

Um den Beginn der Periodensynchronisierung zu erleichtern oder einem Verlust der Periodensynchronisierung zu begegnen, kann die Tiefpaß-Eckfrequenz des Ringspeichers 14 erhöht werden, wobei das Eingangssignal abgeschwächt und/oder tiefpaßgefiltert wird. Dies ist durch einen variablen Widerstand 30 angedeutet, der nach erfolgter Synchronisierung auf unendlich gestellt wird.

Grundsätzlich ist es für die Synchronisierung günstig, wenn das Eingangssignal für die Synchronisierungs-Einrichtung entsprechend aufbereitet wird, z.B. durch die Addition von Flanken durch eine Tiefpaßfilterung. Dabei kann es günstig sein, wenn aus dem Eingangssignal für die Synchronisierung mittels eines anderen Periodenformfilters Anteile entfernt werden, die keine Periodizität im Bereich der gesuchten Periodendauer aufweisen.

Wenn es sich bei dem gesuchten Signalanteil um eine amplitudenmodulierte Signalform handelt, sollte die Modulation ermittelt werden und das Signal demoduliert werden (wenn der gesuchte Signalanteil amplitudenmoduliert ist, schwankt ansonsten der Inhalt bzw. Ausgang des Ringspeichers 14 entsprechend). Alternativ kann auch die oben beschriebene Abbildefunktion des Ringspeicherinhalts bei maximalem Ringspeicher-Ausgangssignal verwendet werden, um das amplitudenmodulierte gesuchte Signal in einem Maximum abzubilden.

Als Verfahren zur Signalvorbehandlung bzw. -aufbereitung kommen allgemein neben Demodulationsverfahren u.a. eine Fouriertransformation oder eine Wavelettransformation oder ein auf einem oder mehreren Filtervorgängen basierendes Verfahren in Frage. Zum Zwecke der Demodulation können u.a. eine Gleichrichtung mit Hüllkurvenbildung, die analog oder digital ausgeführt werden kann, eine Hilberttransformation, eine Wavelettransformation zur Bestimmung von Seitenbandintensitäten zu einer Trägerfrequenz mit nachfolgender Verarbeitung der so bestimmten Information sowie Methoden ausgeführt werden, die ein Originalsignal mit zeitlichen Ableitungen und/oder Integralen kombinieren.

Eine Vorfilterung unter Verwendung von Wavelets kann beispielsweise unter Berücksichtung folgender Überlegungen erfolgen: Wird ein zeitdiskretisiertes (also gesampeltes) Signal mit einer einfachen Fenster- oder Korrelationsfunktion behandelt, so kann man in einer einfachen Weise hoch- und niederfrequente Anteile eines solchen Signal abtrennen. Wird als Fenster eine Funktion verwendet, die z.B. für zwei Samples eine Faltung mit (+1, +1) vornimmt, so erhält man per solcher Mittelwertbildung ein einfaches Tiefpassverhalten, was zu niederfrequenten spektralen Anteilen führt. Eine Faltung mit der Funktion (-1, +1) spaltet hingegen hochfrequente Anteile ab. Diese Vorgehensweise kann man einerseits als Anwendung sehr einfacher FIRDigitalfilter auf ein zeitdiskretisiertes Signal auffassen, andererseits ist auch eine Ähnlichkeit zu Hadamard-, Haar- oder Walsh-Transformationen erkennbar. Diese Vorgehensweise vergleicht sich entsprechend auch mit der Anwendung zweier zu diesem Zweck ausgesuchter Wavelet-Basisfunktionen, die jetzt aber einen kontinuierlichen Wertebereich der Funktionswerte aufweisen. Die "Faltung" des Originalsignals mit einer ersten und eher niederfrequenten Wavelet-Funktion führt zu niederfrequenten Ausgangssignalen, welche dann dem Ringkorrelationsformfilter zugeführt werden können. Die Anwendung einer zeitlich kurzen Wavelet-Basisfunktion gibt dann hochfrequente Signalanteile für eine entsprechende weitere Verwendung.

Bei der Fig. 1 handelt es sich um ein analoges Ersatzschaltbild für einen Periodenformfilter. Es versteht sich, daß der Periodenformfilter grundsätzlich auch in analoger Form ausgeführt sein kann, wobei es sich bei dem Beispiel von Fig. 1 dann bei dem Ringspeicher um eine rotierende Anordnung von Kondensatoren handeln würde. Die analogen Funktionen können jedoch auch digital nachgebildet sein, wobei dies bevorzugt wird. Der Ringspeicher ist jedoch vorzugsweise digital ausgebildet, wobei die Speicherelemente als zyklisch adressierte Akkumulatoren ausgebildet sind und das Eingangssignal mit einer Abtastrate digitalisiert wird, die dem Produkt aus Rotationsfrequenz und Anzahl der Speicherelemente entspricht. Vorzugsweise handelt es sich dabei um ein Ringspeicherarray aus $2^n$ Elementen, dessen Schreib-Lese-Zeiger um den gerundeten Wert inkrementiert wird, der sich ergibt aus Zahl der Elemente geteilt durch Abtastrate geteilt durch gesuchte Periodendauer bzw. "Rotations"-Periode des Ringspeichers. Bei dieser digitalen Ausführung "rotiert" also der Zeiger auf die Speicherelemente. Die Speichertiefe ergibt sich dabei als Produkt aus Abtastrate und Periodendauer. Bei konstanter Abtastrate führt dabei eine Veränderung der Periodendauer bzw. Rotationsfrequenz sowohl zu einer entsprechenden Änderung der Speichertiefe als auch des Inkrements. Entsprechend kann bei der Synchronisierung der Rotationsfrequenz auf die gesuchte Periodendauer das Inkrement oder die Speichertiefe geändert werden, d.h. im Falle des Phasenreglers 20 aus Fig. 1 wird ein zu dem Inhalt des Akkumulators 26 proportionaler Wert zu der Ringspeichertiefe addiert bzw. von dieser abgezogen oder das Inkrement wird um einen zu dem Inhalt des Akkumulators 26 proportionalen Wert geändert.

Bei der digitalen Ausführung kann das Periodenformfilter so ausgebildet sein, daß in das entsprechende Speicherelement jeweils der Mittelwert des während des entsprechenden Abtastintervalls anliegenden Eingangssignals hinzuakkumuliert wird.

Es versteht sich, daß ein Periodenformfilter auch dazu verwendet werden kann, gezielt einen Signalanteil mit einer bestimmten Periode aus einem Signal zu eliminieren, indem der Ausgang des Periodenformfilters von dem Eingangssignal abgezogen wird. Ferner können, falls mehrere Signalanteile mit unterschiedlicher Periodizität separiert werden sollen, entsprechend mehrere verschiedene Periodenformfilter mit unterschiedlicher Rotationsfrequenz verwendet werden, wobei die Ausgänge der jeweils anderen Periodenformfilter von dem Eingangssignal für ein bestimmtes Periodenformfilter abgezogen werden können, um die Separation des Signalanteils mit der entsprechenden Periodizität zu erleichtern.

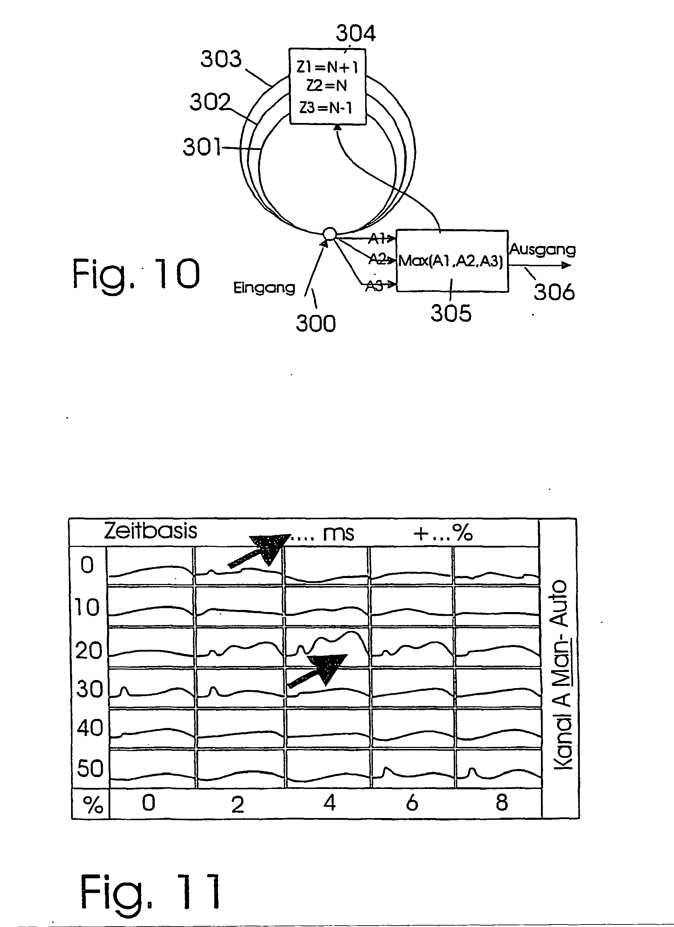

Statt der in Fig. 1 gezeigten Realisierung der direkten Synchronisierung des Periodenformfilters auf das Eingangssignal mittels des Phasenreglers 20 kann beispielsweise auch die in Fig. 10 gezeigte Lösung verwendet werden. Dabei werden drei Periodenformfilter bzw. Ringspeicher 303, 302, 301 anstelle eines einzigen verwendet, die mit geringfügig unterschiedlicher Rotationsperiode bzw. -frequenz parallel rotieren (die in Fig. 10 gezeigte Anordnung kann gleichermaßen als einziges Periodenformfilter mit drei Ringspeichern oder als Kombination von drei Periodenformfiltern mit je einem Ringspeicher betrachtet werden). Dabei ist ein gemeinsamer Koppelknoten 300 vorgesehen, um das Eingangssigal parallel allen Periodenformfiltern 303, 302, 301 zuzuführen und von jedem der Periodenfonnfilter 303, 302, 301 das Ausgagssignal separat abzunehmen, welches einer Einheit 305 zugeführt wird. Die Einheit 305 wirkt einerseits als Auswahlstufe, welche am Ausgang 306 jeweils das Ausgangssignal desjenigen Periodenformfilters ausgibt, der momentan das Ausgangssignal mit der größten Amplitude liefert, d.h. das Periodenformfilter mit dem maximalen Ausgangssignal wird jeweils als aktuelles bzw. "gültiges" Periodenformfilter ausgewählt. Außerdem wirkt die Einheit 305 als Regler für die Rotationsperiodendauern bzw. — frequenzen, indem sie mittels einer Einheit 304 die Rotationsfrequenzen der Periodenformfilter 303, 302, 301 so steuert, daß das aktuelle Periodenformfilter, d.h. das mit der momentan größten Ausgangssignalamplitude, das Periodenformfilter mit der mittleren Rotationsperiodendauer ist (in Fig. 10 ist das das Periodenformfilter 302). Dabei werden die Rotationsperiodendauern aller Periodenformfilter 303, 302, 301 jeweils in die gleiche Richtung verändert, d.h. sie werden entweder gemeinsam verringert, wenn das Periodenformfilter 301 mit der kürzesten Rotationsperiode als aktuelles Periodenformfilter ermittelt wurde, oder sie werden gemeinsam vergrößert, wenn das Periodenformfilter 303 mit der längsten Rotationsperiode als aktuelles Periodenformfilter ermittelt wurde. Das Inkrement kann dabei für alle Periodenformfilter gleich oder unterschiedlich sein, ist jedoch sinnvollerweise maximal so groß wie die Periodendifferenz zweier "benachbarter" Periodenformfilter. Wenn das Periodenformfilter 302 mit der mittleren Rotationsperiode als aktuelles Periodenformfilter ermittelt wurde, werden die Periodendauern nicht verändert. Die Ennittlung des aktuellen Periodenformfilters erfolgt beispielsweise nach jedem Umlauf. Da es nur ein integrierendes Element gibt, nämlich das (aktuelle) Periodenformfilter bzw. dessen Tiefpaßwirkung, ist die vorgeschlagene Regelung stabil. Die Einheit 305 bewirkt also, daß die Periodenformfilter 303, 302, 301, und dabei insbesondere das Periodenformfilter 302 mit der mittleren Periodendauer, auf die Periodendauer der interessierenden Signalanteile geregelt bzw. synchronisiert wird, so daß keine weitere Synchronisierungeinrichtung erforderlich ist, wobei ferner an dem Ausgang 306 auch jeweils das richtige, d.h. das am besten zutreffende, Signal ausgegeben wird. Das beschriebene Regelungskonzept ist nicht auf die Verwendung von drei Periodenformfiltern beschränkt, sondern es können auch mehr Periodenformfilter verwendet werden, wobei entsprechend auf ein oder das Periodenformfilter mit einer mittleren Periodendauer geregelt wird.

In Fig. 10 sind digital ausgeführte Periodenformfilter gezeigt, wobei die Änderung der Rotationsperiodendauer durch Änderung der Speichertiefe Z erfolgt und sich die Speichertiefen der Periodenformfilter 303, 302, 301 um Eins unterscheiden. Bei einer Regelungsschleife werden die einzelnen Speichertiefen dann um Eins erhöht bzw. verringert. Die Güte der Periodenformfilter 303, 302, 301 wird in der Größenordnung von N eingestellt.

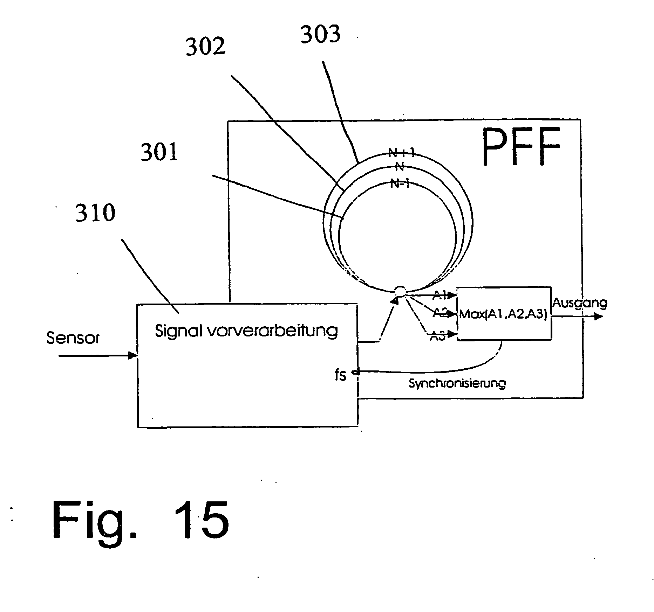

In Fig. 15 ist eine Abwandlung der in Fig. 10 gezeigten Ausführungsform dargestellt, wobei eine Vorverarbeitung des beispielsweise von einem Sensor stammenden Eingangssignals durch eine mit dem Bezugszeichen 310 versehene Stufe erfolgt. Die grundsätzlichen Möglichkeiten zur Signalvorbearbeitung in der Stufe 310 wurden bereits im Zusammenhang mit der Beschreibung der Ausführungsform gemäß Fig. 1 erläutert. Fig. 15 zeigt nun die Möglichkeit, daß die zu Synchronisierungszwecken in der oben angebenen Weise variabel gehaltene Abtastfrequenz der Periodenformfilter 301, 302, 303 gleichzeitig als Abtastfrequenz für die in der Stufe 310 ablaufende Signalvorverarbeitungsprozesse verwendet werden kann.

Alernativ kann mit fest eingestellten Abtastfrequenzen gearbeitet werden, wobei dann für die Synchronisierung mit einer variablen Anzahl von Ringspeicherzellen gearbeitet wird.

Mit dem beschriebenen Synchronisierungsprinzip kann beispielsweise ein Oszillograph mit automatischem Periodensuchlauf realisiert werden, wobei die oft komplizierte Triggerbedingung für das interne Signal bei herkömmlichen Oszillographen dann entfällt.

Ferner kann das Konzept mit mehreren "parallelen" Periodenformfiltern auch dahingehend ausgebaut werden, daß bei einem Oszillographen bzw. Signalanalysator eine Vielzahl von Periodenformfiltern mit jeweils nur geringfügig unterschiedlicher Periodendauer vorgesehen ist, um einen bestimmten Periodendauerbereich, z.B. im Umfang von einer Oktave (Faktor 2), mit einer bestimmten Güte abzudecken. Die Güte der einzelnen Periodenformfilter kann dabei in etwa der jeweiligen Speichertiefe entsprechen. Falls die zu erwartende "Mittenperiode" hinreichend genau bekannt und stabil ist, kann auf eine Periodendauernachführung, wie sie oben beschrieben wurde, verzichtet werden und die Rotationsperiodendauern werden vorgegeben bzw. eingestellt. Ansonsten wird auf ein Periodenformfilter mit einer mittleren Periodendauer geregelt, d.h. die Periodendauern werden gemeinsam so geändert, daß dieses Periodenformfilter das maximale Ausgangssignal hat.

Die Inhalte bzw. Ausgangssignale der einzelnen Periodenformfilter werden dann beispielsweise verkleinert auf einem Bildschirm dargestellt (siehe Fig. 11) und der Benutzer kann sich zur Signalanalyse bzw. -bewertung wahlweise bestimmte Periodenformfilter herauszoornen und das "beste" Periodenformfilter zur weiteren Signalanalyse auswählen. Die Auswahl kann jedoch auch automatisch erfolgen, wobei zweckmäßigerweise das Periodenformfilter mit den größten Ausgangssignal gewählt wird. Insgesamt stellt dieses "Multiperiodenkonzept" eine sehr bedienerfreundliche Lösung dar.

Statt durch Periodenformfilter mit rotierendem Ringspeicher kann die Separation von Signalanteilen mit einer bestimmten Periodendauer auch allgemein dadurch erfolgen, daß ein Signal in Abschnitte mit jeweils einer bestimmten Dauer, die in etwa der gesuchten Periodendauer entspricht, unterteilt wird, die Phasenverschiebung der Signalabschnitte zueinander ermittelt wird, die Signalabschnitte bezüglich der Phasenverschiebung korrigiert werden und die so phasenkorrigierten Signalabschnitte addiert werden, um die gesuchten Signalanteile mit der gesuchten Periodendauer zu erhalten. Die Signalabschnitte können dabei nahtlos aufeinanderfolgen oder, wenn schon bekannt ist, daß über einen bestimmten Signalzeitraum kein "interessierender" Signalanteil zu erwarten ist, kann in diesem Zeitraum auf die Erfassung von Signalabschnitten verzichtet, werden, wobei dann zweckmäßigerweise eine Triggerung verwendet wird.

Bei der Phasenkorrektur kann so vorgegangen werden, daß die Phasenverschiebung zwischen dem ersten und dem zweiten Signalabschnitt ermittelt wird und dann der erste und der zweite Signalabschnitt phasenkorrigiert addiert werden und das so erhaltene Summensignal gespeichert wird, wobei diese Prozedur für die übrigen Signalabschnitte iterativ wiederholt wird mit der Maßgabe, daß das Summensignal die Rolle des ersten Signalabschnitts übernimmt und der jeweils aktuell bearbeitete Signalabschnitt die Rolle des zweiten Signalabschnitts übernimmt. Die Phasenverschiebung kann jeweils durch Ermittlung des Maximums der Korrelation zwischen den betreffenden Signalen bzw. Abschnitten ermittelt werden, wobei bei nahtlos aufeinanderfolgen Abschnitten zweckmäßigerweise das Maximum der Ringkorrelation bestimmt wird. Vorzugsweise bemißt sich die Gewichtung eines Signalabschnitts bei der Addition nach dem Wert des jeweils ermittelten Maximums der Korrelation, um schlecht korrelierte Signalabschnitte in der Summe schwächer zu berücksichtigen. Die Summe der ermittelten Korrelationsmaxima ist ein Maß für die Konfidenz des ermittelten Summensignals aus den Abschnitten. Die gesuchte Periodendauer kann regelmäßig überprüft werden und die Signalabschnittsdauern ggfs. an Änderungen der gesuchten Periodendauer angepaßt werden.

Die Wirkung des Verfahrens besteht also darin, aus einem Signal, welches Abschnitte mit an sich übereinstimmender Periodendauer, jedoch unbekannter Phasenbeziehung, enthält, durch Herausgreifen dieser Abschnitte und phasenrichtige Überlagerung, alle Signalanteile mit dieser Periodendauer zu separieren. Ein relevantes Ergebnis kann dabei selbst dann erhalten werden, wenn die Abschnittsdauer nicht genau mit der Periodendauer übereinstimmt.

Die Unterteilung in die Abschnitte kann z.B. erst nach Aufnahme des Signals erfolgen, d.h. der gesamte Signalzug wird vor der Auswertung gespeichert, oder die Unterteilung bzw. Abschnittsbildung erfolgt bereits bei der Aufnahme des Signals. In letzterem Fall kann die Signalaufnahme mittels eines Ringspeichers, z.B. gemäß Fig.1, erfolgen, wobei die Rotationsdauer auf die gesuchte Periodendauer eingestellt wird, aber die einzelen Signalabschnitte nicht einfach unkorrigiert addiert bzw. akkumuliert werden, sondern der Ringspeicher nach jedem Umlauf ausgelesen und rückgesetzt wird, wobei das ausgelesene "Abbild" des Ringspeichers dann jeweils den aktuellen Signalabschnitt darstellt, der zu dem bereits bestehende Summensignal aus den vorhergehenden "Abbildern" in einem zweiten Speicher addiert wird, wobei jedoch vor der Addition wie oben beschrieben die relative Phasenlage, z.B. mittels Ermittlung des Korrelationsmaximums, ermittelt und ggfs. korrigiert wird und die Gewichtung bei der Addition z.B. entsprechend dem Korrelationsmaximum erfolgt. Hier sind also letzlich zwei Ringspeicher vorhanden, so daß ein solches Periodenformfilter auch als Periodenformfilter mit zwei Ebenen (Komplexität 2) betrachtet werden kann, wobei schließlich das interessierende Summensignal nicht als Inhalt des ersten Ringspeichers, der direkt das Signal abgreift, sondern als Inhalt des zweiten Ringspeichers, in welchem die phasenkorrigierte Summe der Einzelperioden gebildet wird, vorliegt, wodurch ein automatisch phasenkorrigiertes Periodenformfilter realisiert werden kann.

Zur Veringerung des Rechenaufwands kann dieses Prinzip so abgewandelt werden, daß nicht die vollständige Berechnung der Korrelationsfunktion, d.h. für alle Phasendifferenzen, erfolgt, sondern nur für kleine Phasendifferenzen, so daß nur der "Trend" der Phasenverschiebung, d.h. ob nach hinten oder nach vorn, für jeden Abschnitt ermittelt wird, was zumindest ausreicht, wenn nur kleine Phasendifferenzen auftreten. Entsprechend erfolgt die Verschiebung des aktuellen Abschnitts vor der Addition in die Richtung der größeren Korrelation, d.h. es wird sozusagen nur das relative Maximum der Korrelation für kleine Phasendifferenzen ermittelt. In gewisser Weise wird dieses "differentielle" Vorgehen nur die Ableitung der Korrelation betrachtet. Dieses Prinzip kann auch zur Synchronisierung eines Periodenformfilters herangezogen werden, indem sich das Periodenformfilter die jeweils ermittelte Phasenverschiebung "merkt" und die Rotationsphase bzw. -dauer entsprechend nachgeführt wird.

Periodenformfilter sind besonders bei der Ermittlung von Schäden an sich zyklisch bewegenden, insbesondere rotierenden, Maschinenelementen geeignet, da Schäden in der Regel in einem durch die Bewegung verursachten und von einem Sensor aufgenommenen Signal, insbesondere einem Schwingungssignal, zu Signalanteilen mit einer für das jeweilige Maschinenelement charakteristischen Periodizität führen, wobei jedoch diese interessierenden periodischen Signalanteile in der Regel mit Signalanteilen mit anderer Periodizität oder mit nichtperiodischen Signalanteilen überlagert sind. Dabei können Periodenformfilter verwendet werden, um Signalanteile mit einer bestimmten (störenden) Periodizität aus dem zu analysierenden Signal zu eliminieren, oder sie können verwendet werden, um einen interessierenden Signalanteil mit einer einstellbaren Periode aus dem Signal zu separieren, um diesen Anteil einer Schadensanalyse zu unterziehen.

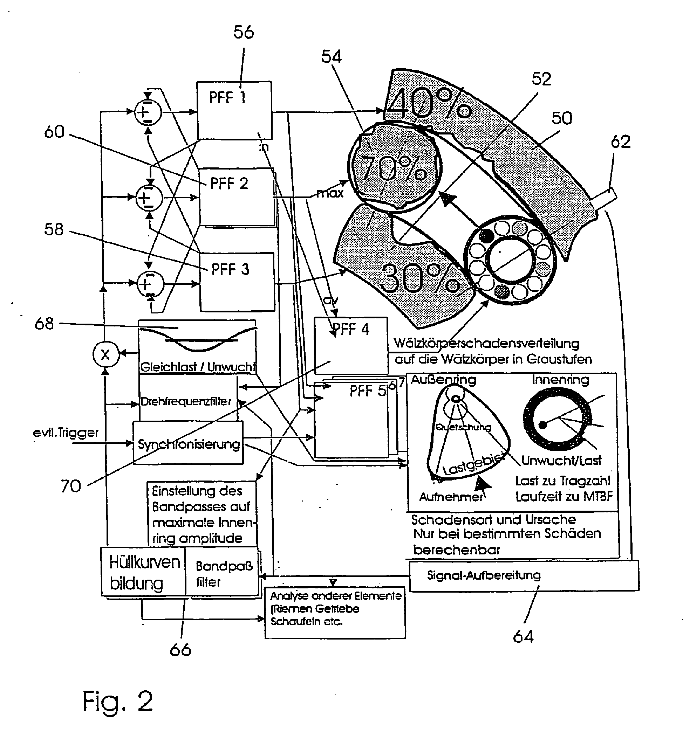

In Fig. 2 ist beispielhaft die Verwendung von Periodenformfiltern in einem Wälzlager-Diagnosesystem gezeigt. Bei den zu überwachenden Wälzlagerelementen handelt es sich um den Außenring 50, den Innenring 52 sowie die Wälzkörper 54, wobei dem Außenring 50 und dem Innenring 52 jeweils ein Periodenformfilter 56 bzw. 58 zugeordnet ist, während den Wälzkörpern 54 insgesamt ein Periodenformfilter 60 zugeordnet ist. Die Rotationsfrequenzen der Periodenformfilter 56, 58 und 60 entsprechen der Außenring-Überrollfrequenz, der Innenring-Überrollfrequenz bzw. der Wälzkörper-Überrollfrequenz.

Ein Schwingungsaufnehmer 62 ist fest an den Außenring 50 gekoppelt, um dessen Schwingungen in ein entsprechendes elektrisches Schwingungssignal umzuwandeln. Das so erzeugte Schwingungssignal wird einer Signalaufbereitungsstufe 64 und anschließend einer Filterstufe 66 zugeführt, in welcher eine Bandpaßfilterung und Demodulation bzw. Hüllkurvenbildung, beispielsweise mittels eines oder mehrerer Spitzenwertdetektoren, erfolgt. Der Bandpaßfilter 66 kann dabei so eingestellt werden, daß sich eine maximale Ausgangssignal-Amplitude des Innenring-Periodenformfilters 58 ergibt.

Ein Schadenssignal entsteht dadurch, daß ein Wälzkörper 54 einen Schaden in der Außenringlauffläche oder der Innenringlauffläche überrollt oder ein beschädigter Wälzkörperumfangsbereich gerade auf der Außenringlauffläche oder der Innenringlauffläche abrollt, wobei in allen Fällen der Wälzkörper 54 ausgelenkt wird und dabei eine Kraft entsprechend der Steifigkeit des Kontakts mit den Innenring 52 bzw. dem Außenring 50 erfährt, wodurch entsprechend der Übertragungsfunktion für die Wälzkörperauslenkung ein Beschleunigungssignal erzeugt wird, das schließlich von den Sensor 62 erfaßt wird. Das aufgenommene Signal wird somit durch diese frequenzabhängige Übertragungsfunktion "verzerrt" und kann nur bei Kenntnis der Übertragungsfunktion genau der Schadenstiefe und der Schadensform zugeordnet werden. Vorzugsweise wird deshalb ein dynamisches Modell des eingebauten Lagers und der angkoppelten Maschinenelemente entwickelt, um die Übertragungsfunktion zu ermitteln und das echte Schadenssignal möglichst zu rekonstruieren, bevor es analysiert wird.

Da diese Übertragungsfunktion unterschiedlich ist, je nachdem, ob das Schadensignal von einen Kontakt zwischen Wälzkörper und Innenring oder Wälzkörper und Außenring erzeugt wird, wird die Übertragungsfunktion für beide Fälle ermittelt, wobei dann in der Signalaufbereitungsstufe je ein Frequenzfilter, d.h. Bandpaßfilter vorgesehen ist, dessen Übertragungsfunktion gerade so gewählt ist, daß die ermittelte Schadenssignalübertragungsfunktion kompensiert wird. Auf diese Weise wird das Signal in der Stufe 64 in zwei Zweige mit unterschiedlicher Aufbereitung aufgeteilt (in Fig. 2 nicht dargestellt), wobei der eine Zweig dem Außenringperiodenformfilter 56 und der andere dem Innenringperiodenformfilter 58 zugeführt wird. Das Wälzkörper-Periodenformfilter 60 kann in doppelter Ausführung vorgesehen sein, wobei jedem der beiden Periodenfonnfilter dann einer der beiden unterschiedlich Frequenzgang-korrigierten Signalzweige zugeführt wird.

Vorzugsweise folgt auf die Filterstufe 66 ein Periodenformfilter, welches auf die Drehfrequenz der Lagerwelle synchronisiert ist und dessen Ausgangssignal von dem von der Filterstufe 66 gelieferten Signal abgezogen wird, um störende Anteile mit der Periodizität der Welle aus dem zu analysierenden Signal zu entfernen (in Fig. 2 nicht dargestellt). Danach wird das Schwingungssignal mit einem Signal aus einer Einheit 68 multipliziert, welche die Auswirkungen einer Gleichlast oder Unwucht auf das Signal kompensieren soll. Schließlich wird das Schwingungssignal jedem der Periodenformfilter 56 bis 60 zugeführt, wobei jedoch vorher jeweils die Ausgangssignale der beiden anderen Periodenformfilter 56 bis 60 abgezogen werden, um für jeden der Periodenformfilter 56 bis 60 die Separation des Signalanteils mit "seiner" Periodizität zu erleichtern. Die Periodenformfilter 56 bis 58 sind vorzugsweise, beispielsweise mittels eines wie in Fig. 1 beschriebenen Phasenreglers, direkt auf das jeweilige Eingangssignal synchronisiert, um Drehzahländerungen der Welle und Druckwinkel- bzw. Kontaktwinkeländerungen des Lagers durch Laständerungen auf einfache Weise zu kompensieren. Insbesondere können auf diese Weise auch die Außenroll-Überrollfrequenz, die Innenring-Überrollfrequenz und die Wälzlager-Überrollfrequenz ermittelt werden, indem die Rotationsfrequenz des entsprechenden Periodenformfilters 56 bis 60 ermittelt wird, bei welcher das jeweilige Ausgangssignal maximal wird. Da die entsprechenden Frequenzen von dem Druckwinkel bzw. Kontaktwinkel abhängen, kann daraus der Kontaktwinkel und somit beispielsweise bei einem Radiallager die Axiallast ermittelt werden. Aus der Änderung der Axiallast wiederum, die mit dem zweifachen der Wellenfrequenz auftritt, kann ein eventueller Ausrichtfehler erkannt werden. Wenn ferner auch ein Periodenformfilter 70 für die Käfigdrehfrequenz vorgesehen ist, kann aus dem Verhältnis von der damit ermittelbaren Käfigdrehfrequenz zu der Wellendrehfrequenz der Schlupf der Wälzkörper ermittelt werden. Aus der zeitlichen Entwicklung dieses Schlupfs kann auf den Schmierzustand des Lagers geschlossen werden.

Das Ausgangssignal des Außenring-Periodenformfilters 56 stellt im Idealfall eine Abbildung der Lauffläche des Außenrings dar, wobei diese jedoch entsprechend der Wälzkörperanzahl abschnittsweise gemittelt ist, d.h. das Ausgangssignal stellt eine Mittelung über alle Abschnitte dar. Dies gilt in gleicher Weise für das Ausgangssignal des Innenring-Periodenformfilters 58.

Fig. 3 zeigt beispielhaft den Verlauf eines solchen Schadenssignals des Außenring- oder Innenring-Periodenformfilters. Um aus einem solchen Signal diagnostische Information zu gewinnen, können u.a. folgende Operationen vorgenommen werden. Es wird die Durchschnittsamplitude Av des Signals gebildet. Als Schadenssignal werden dann alle Amplituden betrachtet, die diese Durchschnittsamplitude Av übersteigen. Aus diesen Schadensamplituden wird dann eine durchschnittliche Schadensamplitude Sav berechnet. Ferner wird die maximale Schadensamplitude Max gebildet. Es wird eine Gesamtschadenslänge GSL in Prozent der Schadensperiode bzw. Schadenssignalperiode berechnet, wobei dies beispielsweise als Summe aller Zeiten definiert sein kann, während derer die Schadensamplitude größer als die durchschnittliche Schadensamplitude Sav ist. Im vorliegenden Beispiel beträgt die Gesamtschadenslänge 28 %. Es kann ein durchschnittlicher Grundrauschpegel R gebildet werden, bei welchem über alle Amplituden gemittelt wird, welche kleiner als die Durchschnittsamplitude Av sind. Schließlich kann das Verhältnis der Maximalamplitude zu dem Grundrauschpegel gebildet werden. Zweckmäßigerweise werden die maximale Schadensamplitude, die Gesamtschadenslänge, die durchschnittliche Schadensamplitude sowie der Grundrauschpegel hinsichtlich ihrer zeitlichen Veränderung verfolgt. Ebenso wird die Schadensform, d.h. die Form des Schadenssignals, mit der Zeit verfolgt. Für die genannten Größen können in Abhängigkeit von der Schadensart, der Lagerart und der Lagerungsart Grenzwerte gebildet werden, bei deren Überschreiten ein Alarm ausgelöst wird. Zweckmäßigerweise wird das Schadenssignal graphisch so aufgetragen, daß der Zeitnullpunkt bei dem ersten Minimum vor dem Amplitudenmaximum liegt.

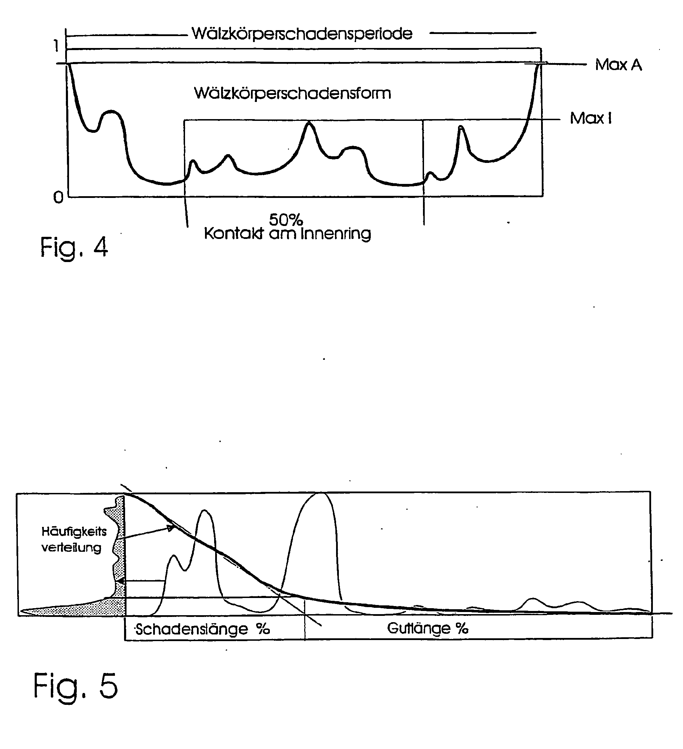

Fig. 4 zeigt einen beispielhaften Schadenssignalverlauf des Wälzkörper-Periodenformfilters 60. Im Gegensatz zu den Außenring- und Innenring-Schadenssignalen zeigt das Wälzkörper-Schadenssignal in der Regel eine Doppelstruktur, die davon herrührt, daß jeder Wälzkörper 54 in der Regel sowohl gleichzeitig auf dem Außenring 50 als auch auf dem Innenring 52 abrollt, wodurch eine Schadensstruktur auf der Wälzkörper-Lauffläche während einer Überrollperiode des Wälzkörpers 54 ein Schadenssignal während des Kontakts mit dem Außenring 50 und ein zweites ähnliches Schadenssignal während des Kontakts mit dem Innenring 52 erzeugt. Der zentrale Bereich in Fig. 4 zeigt dabei das Schadenssignal, das von dem Innenringkontakt herrührt, während die beiden Randbereiche das Schadenssignal beinhalten, welches von dem Außenringkontakt herrührt. Da die Intensität bzw. Amplitude des Innenringkontakt-Signals bzw. Außenringkontakt-Signals von der Koppelung zwischen den Wälzkörpern 54 und dem Außenring 50 bzw. dem Innenring 52 abhängt, kann das Amplitudenverhältnis zwischen den beiden Signalen verwendet werden, um Rückschlüsse auf die Kraftverhältnisse im Lager zu ziehen. Bei einem reinen Radiallager ohne Gleichlast und Unwucht sollte beispielsweise die Innenringkontakt-Amplitude des Wälzkörper-Schadenssignals verschwinden, da die Wälzkörper 54 nicht auf den Innenring 52 gedrückt werden, während ein Außenringkontakt-Signal entsprechend der durch die Käfigdrehfrequenz verursachten Zentrifugalkräfte der Wälzkörper 54 auftreten sollte. Der Zentrifugalkraftanteil kann jedoch aus der Kenntnis der Lagergeometrie und der Wellen- bzw. Käfigdrehzahl errechnet werden. Das Innenringkontakt-Signal sollte dagegen ausschließlich aus der Summe der (radialen) Gleichlast und der Unwucht herrühren, so daß aus dem aus dem Wälzkörper-Schadenssignal zu bestimmenden Verhältnis zwischen Innenringkontakt-Amplitude und Außenringkontakt-Amplitude und der Kenntnis der Zentrifugalkraft die Summe aus Gleichlast und Unwucht berechnet werden kann. Das Bandpaßfilter 66 für das Wälzkörper-Periodenformfilter 60 sollte auf die Wälzkörper-Rensonanzfrequenz eingestellt werden. Wenn ein Innenringschaden oder ein Außenringschaden vorhanden ist, kann die Wälzkörper-Resonanzfrequenz durch Veränderung des Bandpaßfilters für das Außenring-Periodenformfilter 56 und das Innenring-Periodenformfilter 58 unter Beobachtung des entsprechenden Ausgangssignals ermittelt werden. Wenn die Lagerlast bekannt ist, kann die Wälzkörper-Resonanzfrequenz berechnet werden. Wenn irgendein Lagerschaden vorhanden ist, kann die Lagerresonanzfrequenz, d.h. die Resonanz zwischen Welle und Lagerbock, ermittelt werden.

Eine Unterscheidung zwischen von einer Gleichlast oder einer Unwucht herrührenden Schadenssignalen ist grundsätzlich durch eine Untersuchung der Veränderung des Schadenssignals mit der Zeit möglich, da eine Unwucht die Schadenssignale mit einer anderen Frequenz moduliert als eine Gleichlast. So wird beispielsweise bei einem Radiallager, bei welchem die Welle an dem Innenring befestigt ist, das Außenringsignal durch eine Gleichlast nicht moduliert, es wird jedoch durch eine Unwucht mit der Wellenfrequenz moduliert. Das Innenringsignal dagegen wird durch eine Gleichlast mit der Wellenfrequenz moduliert, während es durch die Unwucht nicht moduliert wird. Das Wälzkörpersignal hingegen wird sowohl durch eine Unwucht als auch eine Gleichlast moduliert, wobei bei einer Unwucht das Signal mit der Differenz zwischen der Wellenfrequenz und der Käfigfrequenz moduliert ist, während eine Gleichlast das Signal mit der Käfigfrequenz moduliert. Eine solche Unwucht- bzw. Gleichlastanalyse kann beispielsweise dadurch erfolgen, daß die Ausgangssignale der Außenring-Periodenformfilter 56, Innenring-Periodenformfilter 58 und Wälzkörper-Periodenformfilter 60 jeweils einem weiteren Periodenformfilter 72, 74 bzw. 76 als Eingangssignal zugeführt werden, welches auf die Wellendrehfrequenz synchronisiert ist.

Das Periodenformfilter 70, welches auf die Käfigfrequenz synchronisiert ist, erhält als Eingangssignal ein auf die Wälzkörperanzahl skaliertes Ausgangssignal des Außenring-Periodenformfilters 56 sowie das durchschnittliche Ausgangssignal des Wälzkörper-Periodenformfilters 60, woraus Informationen über die Wälzkörper-Schadensverteilung auf die einzelnen Wälzkörper erhalten werden kann.

Zur direkten Auswertung des Ausgangssignals des Periodenformfilters 60 wird das maximale Ausgangssignal herangezogen, welches hauptsächlich den am stärksten geschädigten Wälzkörper 54 betrifft.

Grundsätzlich können bei Vorliegen einer Gleichlast und/oder einer Unwucht aus dem Wälzkörper-Schadenssignal Rückschlüsse auf die Verteilung der Schäden über die einzelnen Wälzkörper gezogen werden, da bei einer gleichförmigen Schadensverteilung über alle Wälzkörper beispielsweise weder eine Unwucht noch eine Gleichlast eine Modulation des Signals bewirken, während eine ungleichmäßige Schadensverteilung, z.B. Schädigung nur eines Wälzkörpers, eine maximale Modulation verursacht.

Ein besonderes Problem bei der Ermittlung und Auswertung des Wälzkörper-Schadenssignals ergibt sich, wenn eine Gleichlast oder Unwucht auf das Lager wirkt, so daß der Wälzkörper jeweils nur im Lastgebiet ein periodisches Signal erzeugt und außerhalb des Lastgebiets einen undefinierten Schlupf bezüglich des Innenrings erfährt, so daß das Signal, welches der Wälzkörper bei zwei aufeinanderfolgenden Durchläufen durch das Lastgebiet erzeugt, keine definierte Phasenbeziehung aufweist, d.h. selbst bei konstanter Wälzkörper-Überrollfrequenz im Lastgebiet würden gleiche Signalformen nach mehreren Wälzkörper-Umläufen nicht mehr in die gleichen Speicherelemente des entsprechenden Periodenformfilters fallen.

Diesem Problem kann einerseits so begegnet werden, daß das Wälzkörper-Periodenformfilter 60 mit so niedriger Güte abgestimmt wird, daß es während der Bewegung des Wälzkörpers 54 in dem Lastgebiet bereits einschwingt, wobei die Zeitkonstante beispielsweise so gewählt werden kann, daß sie dem Produkt aus Käfigperiode und Lastwinkel geteilt durch 360° entspricht. Sobald das Ausgangssignal des Periodenformfilters 60 dann maximal wird, wird ein Abbild erzeugt. Aufgrund der erforderlichen niedrigen Güte des Periodenformfilters 60 und der wenigen dazu beitragenden Wälzkörper-Umdrehungen kann jedoch der Fall eintreten, daß das Abbild für die Analyse nicht aussagekräftig genug ist. In diesem Fall muß über mehrere Umläufe des Wälzkörpers gemittelt werden, wobei sich jedoch das Problem stellt, daß die Phasen der so erhaltenen Abbilder des Periodenformfilters nicht übereinstimmen. Eine Lösungsmöglichkeit besteht dann darin, daß diese unbekannte Phasenverschiebung, d. h. der Wälzkörperschlupf, beispielsweise aus dem Maximum der Ringkorrelation zwischen den einzelnen Abbildern, die jeweils aus einem Durchlauf des Wälzkörpers durch das Lastgebiet resultieren, ermittelt wird (d.h. es wird ermittelt, bei welcher Phasenlage das Produkt aufeinanderfolgender Abbilder maximal ist). Anschließend werden die einzelnen Abbilder jeweils um die ermittelte Phasenverschiebung verschoben und aufaddiert, wobei die sich Gewichtung nach dem jeweils ermittelten Maximalwert der Korrelation richtet, um schlecht korrelierte Signale weniger stark zu berücksichtigen. Nach jedem Durchlauf des Wälzkörpers durch das Lastgebiet wird dabei der Ringspeicher des Periodenformfilters rückgesetzt.

Aus der Kenntnis des Schlupfwinkels bzw. der Phasenverschiebung zu Wälzkörperumlauf bzw. Käfigumlauf kann auch die Synchronisierung, in diesem Fall die Phase der Ringspeicherrotation des Periodenformfilters, gesteuert werden, um die Phasenverschiebung bzw. den Schlupfwinkel zu kompensieren. In diesem Fall ist keine Rücksetzung des Periodenformfilters und Abbilderzeugung des erforderlich, sondern das Periodenformfilter kann einfach in üblicher Weise betrieben werden (abgesehen von der Phasenkorrektur der Rotation nach jedem Käfigumlauf).

Aus der Kenntnis der Schlupfwinkel der Wälzkörper können eventuell Aussagen über den Schmierzustand getroffen werden. Schlupfwinkelunterschiede zwischen den einzelnen Wälzkörpern deuten auf Käfigfehler hin, z.B. eingeklemmte Wälzkörper (die Schlupfwinkel einzelner Wälzkörper können ermittelt werden, indem jedem Wälzkörper ein eigenes Periodenformfilter zugeordnet ist, wie dies nachfolgend näher erläutert ist).

Ein alternativer Ansatz für die Ermittlung eines Wälzkörperschadens aus dem Wälzkörper-Schadenssignal trotz Wälzkörperschlupf besteht darin, daß ein Formanalyseverfahren verwendet wird, welches die Form vom Phasenwinkel befreit, d.h. das entsprechende Periodenformfilter wird ohne Phasenkorrektur betrieben. Zu diesem Zweck können bekannte Verfahren verwendet werden, wie beispielsweise Amplituden-Klassifizierung, Ereignis-Analyse, Mittelung, Ermittlung des Gleichanteils bzw. Wechselanteils, Effektivwertbildung etc. Bevorzugt wird jedoch ein Verfahren, bei welchem die Gesamtschadenslänge mittels Amplitudensortierung ermittelt wird. Zur Erläuterung dieses Verfahrens ist in Fig. 5 beispielhaft ein ohne Phasenkorrektur erhaltenes, über mehrere Käfigumläufe integriertes bzw. gemitteltes Wälzkörper-Schadenssignal dargestellt (dünne durchgezogene Linie in Fig. 5). Das ermittelte Signal wird nun hinsichtlich der Größe seiner Einzelamplituden umsortiert, d.h. links stehen die größten Amplituden und rechts die kleinsten Amplituden (fette durchgezogene Linie in Fig. 5). Aus dieser amplitudensortierten Verteilung kann dann eine relative Schadenslänge ermittelt werden, vorzugsweise, indem eine Ausgleichsfunktion, z.B. nach der Methode der kleinsten Fehlerquadratsumme, an die amplitudensortierte Verteilung angepaßt wird. Die Ausgleichfunktion kann so gewählt sein, daß sie vier Parameter enthält, welche der Schadenstiefe, der Schadenslänge, der Rauschamplitude bzw. der Schadensform entsprechen, wobei in Fig. 5 die so ermittelte Schadenslänge angegeben ist.

Grundsätzlich kann mit der erfindungsgemäßen Methode zum Separieren von periodischen Anteilen aus dem gemessenen Wälzlager-Schwingungssignal nicht nur aus einem von einem Laufflächenschaden (Innenring-, Außenring- oder Wälzkörperschaden) verursachten und mit einer charakteristischen Periode auftretenden Signal Information bezüglich des Lagerzustands gewonnen werden, sondern es kann auch bereits ein noch nicht in diesem Sinn geschädigtes Lager diagostiziert werden. Dies ist anhand des auch bei einem ordnungsgemäßen Lager durch die Abrollbewegung der Wälzkörper verursachten Rauschsignals möglich, da dieses durch die auf das Lager wirkenden Kräfte in gewissem Maß in charakteristischer Weise moduliert wird. Hierzu sei als Beispiel ein Radiallager betrachtet, welches mit einer in Radialrichtung wirkender Gleichlast (Gewichtskraft) belastet ist, die einen bestimmten Winkel zu der Richtung des Beschleunigungssensors bildet. Da nur mit einer Kraft belastete Wälzkörper ein Rauschsignal erzeugen, wird ein Rauschsignal (oder Schadenssignal) im wesentlichen nur in einem bestimmten Winkelbereich um die Lastrichtung herum erzeugt (die Breite dieses Winkelbereichs hängt u.a. von der Lagerluft, d.h. dem Spiel zwischen Innenring und Außenring, ab und ist um so kleiner, je größer die Lagerluft ist), wobei der Sensor von dieser Kraft im wesentlichen nur einen Anteil spürt, der zwischen der Lastrichtung und der Sensorrichtung liegt, d.h. ein bestimmter Wälzkörper erzeugt nur dann ein wesentliches Signal, wenn er sich gerade in diesem Bereich befindet (dies gilt für Rauschsignale und Schadenssignale gleichermaßen). Dieser Bereich kann nach seiner Form im Polardiagramm auch als "Sensible Keule" bezeichnet werden.

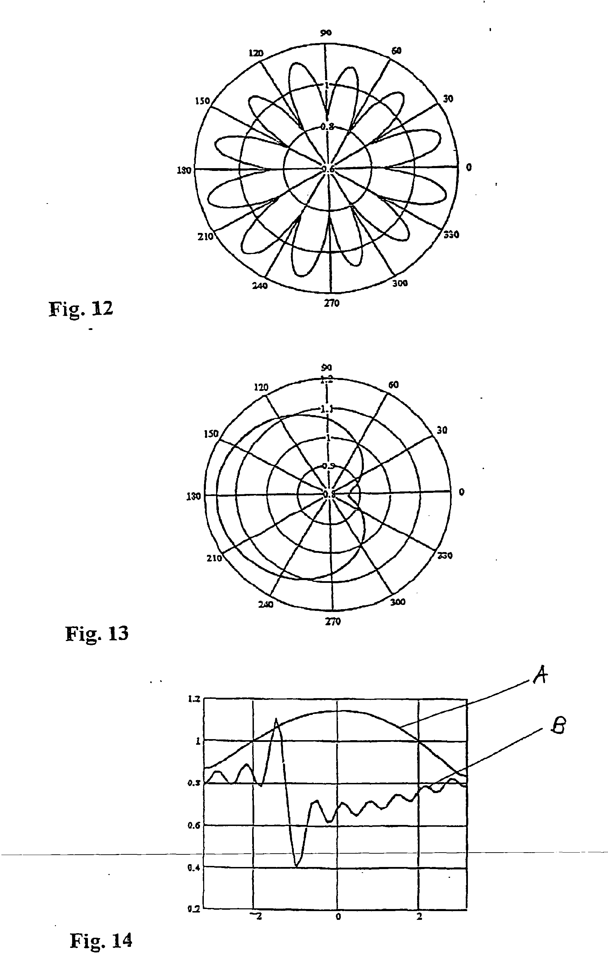

In Fig. 12 ist das Ausgangssignal eines Periodenformfilters gezeigt, welches auf die Käfigumlaufperiode synchronisiert ist, während in Fig. 13 das entsprechende Ausgangssignal eines Periodenformfilters gezeigt ist, das auf die Überrollperiode des Außenrings synchronisiert ist, wobei in Fig. 13 der Winkelbereich entprechend der Anzahl der Wälzkörper gegenüber Fig. 12 gedehnt dargestellt ist (d.h. mit der Anzahl der Wälzkörper multipliziert). Es ist in beiden Fällen ein intaktes Lager ohne Laufflächenschaden angenommen, d.h. das Signal umfaßt nur eine reine Rauschamplitude. Die Modulationen dieser Rauschsignal mit dem Drehwinkel rühren von dem vorstehend beschriebenen Effekt der "sensiblen Keule" her. In Fig. 12 geht jedes Maximum auf einen anderen Wälzkörper zurück. Da sich das Ausgangssignal als Summe der Einzelsignale ergibt, geht das gezeigte Gesamtsignal zwischen dem Maxima nicht auf Null zurück (während das jeweilige Einzelsignal von einem Wälzkörper über einen bestimmten Winkelbereich gemäß der Form der sensiblen Keule tatsächlich Null wäre). Aus der Schärfe der Maxima bzw. der Tiefe der Modulation können Rückschlüsse auf die Lagerluft bzw. die Größe der Lagerlast (auch diese hat Auswirkungen auf die sensible Keule, ist jedoch in der Regel bekannt) gezogen werden, wobei eine vergrößerte Modulationstiefe eine Erhöhung der Lagerluft (z.B. durch Außenringverschleiß) oder eine verringerte Last bedeuten kann. Somit kann z.B. durch Vergleich mit der Signalform im Neuzustand des Lagers der Verschleiß überwacht werden.

Ferner ist in Fig. 12 zu sehen, daß die Maxima nicht alle gleich hoch sind. Dies bedeutet, da sich über das Rauschsignal die Kraftverteilung auf die Wälzkörper abbildet und diese im Periodenformfilter für die Käfigrotation wegen der "sensiblen Keule" einzeln aufgelöst sind, daß die Kraftverteilung auf die einzelnen Wälzkörper im dargestellten Beispiel ungleichmäßig ist, so daß dieses Verfahren bereits bei der Endkontrolle bei der Fertigung eingesetzt werden kann.

Das Außenringüberrollsignal von Fig.13 stellt das während einer vollen Wälzkörperumdrehung (d.h. Dauer des vollständigen Überrollens einer bestimmten Stelle der Außenringlauffläche durch einen bestimmten Wälzkörper) erzeugte Signal aller Wälzkörper, d.h. eine Mittelung über alle Wälzkörpersignale, dar, wobei nur Wälzkörper im Lastbereich beitragen und die Modulationstiefe ähnlich wie in Fig. 12 in diesem Fall im Vergleich zum Signal eines einzelnen Wälzkörpers durch die Beiträge der Wälzkörper, die sich ebenfalls noch zumindest zum Teil im Lastgebiet befinden, verringert ist. Letzlich ist somit das Signal von Fig. 13 eine vergrößerte Darstellung eines "Zackens" aus Fig. 12, die allerdings über alle "Zacken" gemittelt ist. Demgemäß kann also auch aus der Modulation des Rauschsignals mit der Außenringüberrollfrequenz, d.h. indem die Signalanteile, die mit dieser Periode moduliert sind, aus dem Signal separiert werden, auf die "sensible Keule" und damit das Lagerspiel rückgeschlossen werden.

In Fig. 14, in welcher im Gegensatz zu Fig. 12 und 13, der Winkel linear ausgetragen ist, ist zusätzlich zu dem mit der Außenringberrollfrequenz modulierten Rauschsignal von Fig. 13 (Kurve A) ein Signalanteil (Kurve B) gezeigt, der von einem Schaden in der Außenringlauffläche herrührt. Die Kurven A und B können aus dem Ausgangssignal des Außenring-Periodenformfilter durch eine entsprechende Ausgleichsrechnung bzw. Kurvenanpassung gewonnen werden. Auf diese Weise ist möglich, die Lage eines Schadens (Bereich der größten Ausschläge in der Kurve B) relativ zu der Position der "sensiblen Keule" zu bestimmen, so daß im Prinzip eine Lokalisierung des Sachdens möglich ist.

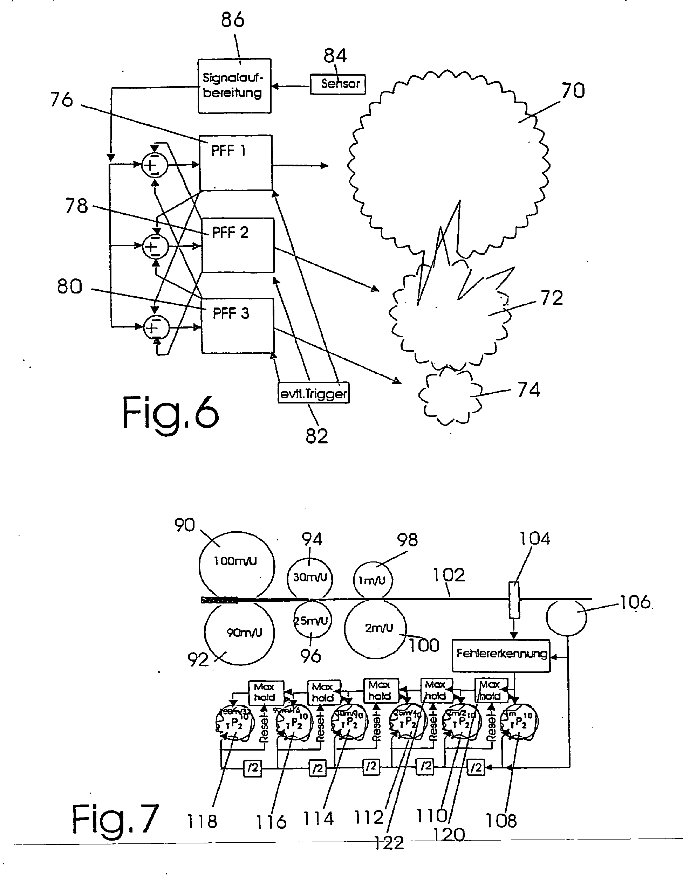

In den Fign. 6 und 7 sind zwei andere Anwendungsbeispiele für die periodenformfiltergestützte Schadensanalyse von sich zyklisch bewegenden Bauteilen dargestellt.

In Fig. 6 ist dabei eine Diagnose-Einrichtung für ein Getriebe schematisch dargestellt, bei welchem drei Zahnrädern 70, 72 und 74 mit unterschiedlichen Durchmessern und somit unterschiedlichen Drehfrequenzen jeweils ein entsprechendes Periodenformfilter 76, 78 bzw. 80 zugeordnet ist, welches jeweils auf die entsprechende Rotationsfrequenz bzw. Rotationsperiode synchronisiert bzw. abgestimmt ist. Da sich im Falle eines Getriebes die Rotationsfrequenz über das Verhältnis der Durchmesser bzw. Zähne eindeutig ergibt, reicht in der Regel die Kenntnis der Antriebs- oder Abtriebswellendrehzahl oder der Drehzahl eines der Getriebeelemente, um die Drehzahlen der anderen Getriebeelemente hinreichend genau zu bestimmen. Insofern können die Periodenformfilter 76 bis 80 durch ein extern erzeugtes Steuersignal aus einer Einheit 82 ohne direkte Synchronisierung auf das Eingangssignal gesteuert werden. Ein Schwingungssensor 84 nimmt, beispielsweise an dem Getriebegehäuse, die Schwingungen des Getriebes auf und erzeugt ein Schwingungssignal, welches in einer Signalaufbereitungsstufe 86, die beispielsweise ein Bandpaßfilter und eine Hüllkurvenbildung umfaßt, bearbeitet wird, um den Periodenformfiltern 76 bis 80 als Eingangssignal zugeführt zu werden, wobei jedoch vorher das Ausgangssignal der jeweils anderen Periodenformfilter 76 bis 80 abgezogen wird, um die Separation der jeweiligen Periodendauer zu erleichtern. Auch hier erzeugen Schäden an den Getriebeelementen charakteristische Schadensanregungen mit einer für das jeweilige Element charakteristischen Periodendauer, so daß eine entsprechende gezielte individuelle Analyse der Elemente ermöglicht wird.

Fig. 7 zeigt schematisch eine Diagnose-Einrichtung für eine Anlage zur kontinuierlichen Herstellung eines Produkts, welches von rotierenden Walzen 90 bis 100 erzeugt wird, deren Oberfläche das Produkt prägen. Bei dem Produkt 102 kann es sich beispielsweise um einen Draht handeln, der von den Walzen 90 bis 100 ausgewalzt wird. Fehler bzw. Unregelmäßigkeiten auf einer Walzenoberfläche bilden sich dabei entsprechend auf dem Produkt ab und führen zu einem entsprechenden Signal an einem Sensor 104, der das Drahtprofil abtastet. Ein Weggeber 106 ermittelt die Vorschubgeschwindigkeit des Produkts 102. Da die Walzen 90 bis 100 unterschiedlichen Durchmesser haben und jeweils eine Verlängerung des Produkts 102 in Vorschubrichtung bewirken, wird der Außenumfang einer jeden Walze 90 bis 100 auf eine unterschiedliche Länge des Produkts 102 abgebildet, so daß sich bei konstanter Vorschubrichtung unterschiedliche Periodendauern für Fehler bei verschiedenen Walzen in dem von dem Sensor 104 erfaßten Profilsignal ergeben. Da auch hier, wie in Fig. 6, die Rotationsfrequenzen der Walzen relativ zueinander feststehen, reicht es, die Vorschubgeschwindigkeit des Produkts mittels des Weggebers 106 zu erfassen, um daraus die Rotationsfrequenzen der einzelnen Walzen 90 bis 100 berechnen zu können. Jeder Walze 90 bis 100 ist ein Periodenformfilter 108 bis 118 zugeordnet, wobei das der Walze 98 zugeordnete Periodenformfilter 108 mittels des Signals des Weggebers 106 auf deren Rotationsfrequenz bzw. Rotationsperiodendauer synchronisiert ist. Das Ausgangssignal des Periodenformfilters 108 sowie das Profilsignal des Sensors 106, welches auch dem Periodenformfilter 108 des Eingangssignals zugeführt wird, bilden das Eingangssignal für einen Spitzenwertdetektor 120, der entsprechend dem Signal des Weggebers 106 rückgesetzt wird und dessen Ausgangssignal als Eingangssignal für das Periodenformfilter 110 dient, welches der Walze 100 zugeordnet ist. Das Periodenformfilter 110 ist auf eine Rotationsperiode synchronisiert, welche der Hälfte der Rotationsperiode der Walze 100 entspricht, wobei das Weggebersignal halbiert und als Trigger für das Periodenformfilter 110 verwendet wird. Der Ausgang des Periodenformfiltes 110 sowie der Ausgang des Spitzenwertdetektors 120 werden einem weiteren Spitzenwertdetektor 122 zugeführt usw. Die Spitzenwertdetektoren 120, 122 usw. dienen dazu, das Signal stufenweise zu verlängern, da auch das Weggebersignal stufenweise halbiert wird. Abgesehen von dieser "Herunterteilung" sind die Periodenformfilter 108 bis 118 jedoch auf die sich ergebenden unterschiedlichen "Abrollstrecken" der Walzen 90 bis 100 auf dem Produkt 102 synchronisiert. Das "Herunterteilen" hat im wesentlichen den Zweck, die Genauigkeiten entsprechend anzupassen, so daß Ringspeicher mit gleicher Speichertiefe verwendet werden können. Der Inhalt jedes Periodenformfilters 108 bis 118 entspricht im eingeschwungenen Zustand schließlich einer Abbildung des Abrollumfangs der entsprechenden Walze 90 bis 100, so daß Oberflächenschäden der Walzen 90 bis 100 direkt als entsprechende Schadensamplituden erkannt werden können. Die Schadensanalyse erfolgt in einer Fehlererkennungsstufe 124.

Eine bessere Synchronisierung zwischen den Periodenformfiltern und den entsprechenden Walzen kann erzielt werden, wenn für jede Walze ein Taktgeber bzw. Drehzahlsensor vorgesehen ist.

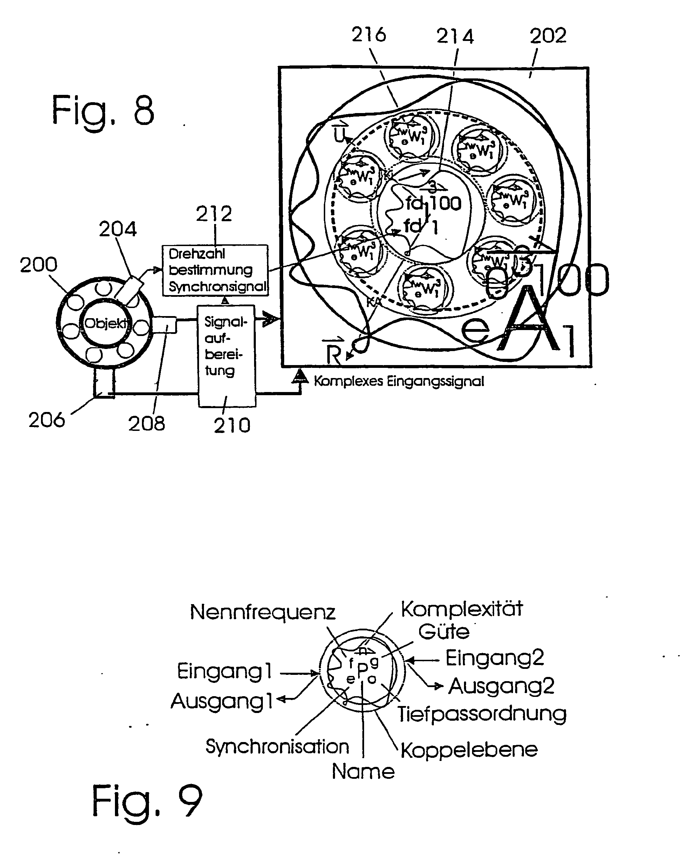

Fig. 8 zeigt eine allgemeinere Darstellung der Verwendung von Periodenformfiltern für die Diagnostik von sich zyklisch bewegenden Maschinenelementen, wobei es sich wie in Fig. 2 dabei um ein Wälzlager 200 handelt. Grundsätzlich soll der Begriff "Periodenformfilter" ein Filter bezeichnen, welches aus mindestens einem Eingangssignal alle Signalanteile mit einer bestimmten Nenn-Frequenz bzw. Nenn-Periode mit einer bestimmten Güte extrahiert bzw. separiert. Prinzipiell kann ein Periodenformfilter mehrere Eingänge und Ausgänge aufweisen, wobei die Zahl der verschiedenen Eingangssignale der Komplexität $n$, d.h. der Anzahl der Ebenen, des Periodenformfilters entspricht. Jede Ebene kann dabei mehrere Tiefpaßordnungen aufweisen. Ein weiteres charakteristisches Merkmal des Periodenformfilters ist die Art der Synchronisierung seiner "Rotation".

In Fig. 9 ist ein Vorschlag für eine symbolische Wiedergabe bzw. Klassifikation von Periodenformfiltern dargestellt. $f$ bezeichnet dabei die Nenn-Frequenz, g bezeichnet die Güte (= $f$ geteilt Bandbreite), $n$ bezeichnet die Anzahl der Ebenen bzw. die Komplexität, $o$ bezeichnet die Tiefpaßordnung, wobei 0 ungefiltert (nur verzögert) bedeutet, 1 Tiefpaß erster Ordnung, 2 Tiefpaß zweiter Ordnung usw. bedeutet, $P$ die symbolische Bezeichnung des Periodenformfilters angibt und ferner ein Symbol vorgesehen ist, welches die Synchronisierung des Periodenformfilters bezeichnet, wobei 0 bedeutet, daß keine Synchronisierung vorhanden ist, $i$ Synchronisierung auf das Eingangssignal bedeutet, $T$

Synchronisierung auf ein Trigger-Signal bedeutet und *P* eine Synchronisierung auf ein anderes Periodenformfilter bezeichnet. Ferner kann jedem Periodenformfilter eine Drehrichtung zugeordnet werden, und es können mehrere Eingangs- bzw. Ausgangsknoten (Koppelstellen) vorgesehen sein, wobei die Koppeleigenschaft der Koppelstelle nicht unbedingt konstant sein muß, sondern von dem jeweiligen "Ort" des Periodenformfilters, der gerade an der (feststehenden) Koppelstelle liegt, oder von der Signalform abhängen kann, auf welche das Periodenformfilter gerade eingeschwungen ist. Die gesamte Ausgangsinformation des Periodenformfilters steckt in dem Inhalt der einzelnen Speicherstellen, d.h. der gespeicherten Signalform, so daß statt des Ausgangs auch die Signalform als Umfangskontur des Periodenformfilters dargestellt werden kann, siehe Fig. 9. Man könnte auch sagen, daß sich die Koppeleigenschaft einer Koppelstelle während einer Umdrehung des Peridenformfilters in Abhängigkeit von dem jeweiligen Drehwinkel und in Abhängigkeit von der Änderung der gespeicherten Signalform ändern kann. Verschiedene Periodenformfilter können miteinander verkoppelt sein, wie dies in Fig. 8 dargestellt ist, wo eine Umfangsberührung der einzelnen Periodenformfilter jeweils eine Koppelungsstelle bezeichnet. Zwischen den Koppelstellen können bekannte Übertragungsfunktionen durch das entsprechende Inverse dieser Funktion kompensiert werden. Grundsätzlich kann ein Periodenformfilter auch invers dargestellt werden, wie dies in Fig. 8 bei dem mit 202 bezeichneten Periodenformfilter der Fall ist. In diesem Fall rotieren statt des Periodenformfilters der bzw. die Koppelknoten.

In Fig. 8 ist das Wälzlager 200 mit drei Sensoren versehen, wobei ein Sensor 204 die Drehzahl der Welle erfaßt und zwei Sensoren 206 bzw. 208 an zwei verschiedenen Stellen auf dem Außenring ein Schwingungssignal aufnehmen, welches einer Signalaufbereitungsstufe 210 zugeführt wird. Das Signal des Sensors 204 wird in einer Auswerteeinheit 212 ausgewertet, welches die Wellendrehzahl erfaßt und ein Synchronsignal für ein dem Innenring zugeordnetes Periodenformfilter 214 erzeugt. Das Periodenformfilter 202 ist dem stationären Außenring des Wälzlagers 200 zugeordnet und ist ebenfalls stationär dargestellt. Jedem Wälzkörper ist ein Periodenformfilter 216 zugeordnet, wobei diese jeweils mit dem stationären Außenring-Periodenformfilter 202 und dem mit der Wellendrehzahl rotierenden Innenring-Periodenformfilter 214 in einer Art gekoppelt sind, welche der Kopplung der Wälzkörper mit dem Innenring bzw. Außenring entspricht, d.h. im Lastgebiet rollen die Wälzkörper auf dem Innenring und dem Außenring ohne Schlupf ab, während außerhalb des Lastgebiets ein Verlust der Phasensynchronisierung bzw. ein Schlupf auftritt. Die Kopplung zwischen den Wälzkörper-Periodenformfiltern 216 und dem Innenring-Periodenformfilter 214 bzw. dem Außenring-Periodenformfilter 202 ist in dazu analoger Weise gestaltet, d.h. die Kopplung wird positionsabhängig gewählt, so daß die Kopplungsstärke von der jeweiligen momentanen Position des entsprechenden Wälzkörper-Periodenformfilters 216 auf seiner Umlaufbahn um das Innenring-Periodenformfilter 214 abhängt. Ferner hängt die Kopplungsstärke auch von der gespeicherten Signalform ab, welche der Abrollbahn des entsprechenden Wälzlagerelements entspricht, so daß beispielsweise dann, wenn gerade eine Spitze an der Koppelstelle liegt, eine stärkere Kopplung erfolgt. Durch die umlaufpositionsabhängige Kopplung können beispielsweise eine Unwucht *U* und eine Gleichlast R berücksichtigt werden.

Das Außenring-Periodenformfilter 202 wird mit zwei verschiedenen Eingangssignalen aus der Signalaufbereitungsstufe 210 versorgt, die dem Sensor 206 bzw. 208 zugeordnet werden können. Dabei handelt es sich bei dem Signal von dem Aufnehmer 206 um ein komplexes Signal, so daß das Außenring-Periodenformfilter 202, und damit auch alle anderen Periodenformfilter 214, 216, drei Ebenen aufweisen, d.h. die Komplexität 3 haben. Alle Periodenformfilter sind als Tiefpaß erster Ordnung ausgebildet, wobei das Außenring-Periodenformfilter 202 und die Wälzkörper-Periodenformfilter 216 auf die Eingangssignale synchronisiert sind, während das Innenring-Periodenformfilter 214 auf das Synchronsignal aus der Verarbeitungsstufe 212 synchronisiert ist. Bei dem Außenring-Periodenformfilter 202 beträgt die Nenn-Frequenz 0, da dies ein stationäres Bauteil repräsentiert, während das Innenring-Periodenformfilter 214 die Wellendrehzahl als Nenn-Frequenz hat und die Wälzkörper-Periodenformfilter 216 die Wälzkörper-Rotationsfrequenz als Nenn-Frequenz haben. Das Außenring-Periodenformfilter 202 und das Innenring-Periodenformfilter 214 haben eine hohe Güte von 100, während die Wälzkörper-Periodenformfilter 216 eine niedrige Güte von 3 haben.

Zu Beginn einer Wälzlager-Diagnose werden alle relevanten Parameter der Periodenformfilter, wie beispielsweise gespeicherte Signalform, Rotationsfrequenz, Verlauf und Momentanwert der Kopplungsstärke, etc. mit entsprechend gewählten Startwerten belegt. Sobald die Messung begonnen hat, werden die beiden Eingangssignale in das Außenring-Periodenformfilter 202 eingespeist, wobei nach einer bestimmten Zeit bzw. einer bestimmten Anzahl von Umläufen entsprechend der Periodenformfilter-Güte die einzelnen Periodenformfilter auf bestimmte Signalformen "einschwingen". Sobald die Periodenformfilter diesen Zustand erreicht haben, d.h. sobald ihre Inhalte bzw. gespeicherte Signalform stationär sind, liegt ein aussagekräftiges Meßergebnis vor, welches dann analysiert werden kann, um den Zustand des Wälzlagers 200 zu bewerten. Die Meßergebnisse umfassen dabei nicht nur die ermittelten Formen, d.h. die gespeicherten Signalformen der einzelnen Periodenformfilter, welche Rückschlüsse auf den Abrollflächenzustand der zugeordneten Wälzlagerelemente liefern können, sondern auch Parameter wie die Wälzkörper-Rotationsfrequenz und die ermittelten Kopplungsverläufe zwischen den einzelnen Periodenformfiltern, was Rückschlüsse auf Unwucht, Gleichlast, Schmierzustand etc. zuläßt (im wesentlichen aus dem so ermittelten Wälzkörperschlupf).

Es versteht sich, daß das in Fig. 8 dargestellte System in entsprechender Weise beispielsweise auch für die Diagnose eines Planetengetriebes verwendet werden kann.

Der wesentliche Aspekt dieser Art der Analyse eines dynamischen Systems besteht darin, daß einzelnen Elementen des zu analysierenden Systems jeweils ein Periodenformfilter zugeordnet wird, wobei die physikalischen Beziehungen der Elemente zueinander durch eine entsprechende Modellierung der Eigenschaften der Periodenformfilter und ihrer Koppelung nachgebildet werden, wobei jedoch diese Nachbildung durch das Einspeisen eines Meßsignals einer selbsttätigen Überprüfung und gegebenenfalls Korrektur unterzogen wird. Im Gegensatz zu einer Simulation wird dabei jedoch kein simuliertes Signal erzeugt, welches dann mit realen Meßsignalen zu vergleichen wäre, um die Simulation zu bewerten.

**Patentansprüche**

1. Verfahren zum Ermitteln von Schäden an mindestens einem sich zyklisch bewegenden Maschinenelement (50, 52, 54), wobei ein durch die Bewegung verursachtes Signal von einem Sensor (62) aufgenommen wird, aus dem Signal mindestens ein Anteil mit einer einstellbaren Periode separiert wird, und der verbleibende Teil des Signals einer Schadensanalyse unterzogen wird,
   **dadurch gekennzeichnet, daß**
   zur Separation von periodischen Signalanteilen das Signal als Eingangssignal einem rotierenden Ringspeicher (14; 301, 302, 303) zugeführt wird, der von zyklisch angeordneten Speicherelementen (16) gebildet wird, die nacheinander mit dem jeweils aktuell an dem Eingang (10) des Ringspeichers anliegenden Eingangssignal beaufschlagt werden, und dessen Rotationsfrequenz mit der Periodendauer der gesuchten Signalanteile zur Übereinstimmung gebracht wird, und die gesuchten Signalanteile als Ausgangssignal des Ringspeichers erhalten werden.

2. Verfahren nach Anspruch 1, **dadurch gekennzeichnet, daß** es sich bei der Periode um die Umdrehungsperiode einer das Maschinenelement antreibenden Welle handelt

3. Verfahren zum Ermitteln von Schäden an mindestens einem sich zyklisch bewegenden Maschinenelement (50, 52, 54), wobei ein durch die Bewegung verursachtes Signal von einem Sensor (62) aufgenommen wird und aus dem Signal mindestens ein Anteil mit einer einstellbaren Periode separiert wird, der einer Schadensanalyse unterzogen wird,
   wobei zur Separation von periodischen Signalanteilen das Signal als Eingangssignal einem rotierenden Ringspeicher (14; 301, 302, 303) zugeführt wird, der von zyklisch angeordneten Speicherelementen (16) gebildet wird, die nacheinander mit dem jeweils aktuell an dem Eingang (10) des Ringspeichers anliegenden Eingangssignal beaufschlagt werden, und dessen Rotationsfrequenz mit der Periodendauer der gesuchten Signalanteile zur Übereinstimmung gebracht wird, und die gesuchten Signalanteile als Ausgangssignal des Ringspeichers erhalten werden.

4. Verfahren nach Anspruch 3, **dadurch gekennzeichnet, daß** das mindestens eine Maschinenelement (50, 52, 54) rotiert und es sich bei dem Signal um ein Schwingungssignal handelt.

5. Verfahren nach Anspruch 3 oder 4, **dadurch gekennzeichnet, daß** die Schadensanalyse im Zeitbereich des separierten Signalanteils vorgenommen wird.

6. Vorrichtung zum Ermitteln von Schäden an mindestens einem sich zyklisch bewegenden Maschinenelement (50, 52, 54), mit einer Einrichtung (56, 58, 60) zum Separieren eines Anteils mit einer einstellbaren Periode aus einem durch die Bewegung verursachten und von einem Sensor (62) aufgenommenen Signal und einer Einrichtung zum Analysieren des separierten und/oder des verbleibenden Teils des Signals,
   wobei die Separation mittels eines Periodenformfilters (56, 58, 60) zur Separation von periodischen Signalanteilen aus einem Signal, mit einem Eingang (10) für das Signal, der einen rotierenden Ringspeicher (14; 301, 302, 303) speist, der von zyklisch angeordneten Speicherelementen (16) gebildet wird, die entsprechend der Rotationsfrequenz nacheinander jeweils mit dem Eingang verbunden werden, und einer Synchronisierungseinrichtung (20), um die Rotationsfrequenz mit der Periodendauer der gesuchten Signalanteile zur Übereinstimmung zu bringen, erfolgt.

7. Verfahren nach Anspruch 1 bis 5, **dadurch gekennzeichnet, daß** es sich bei den Maschinenelementen um den Außenring (50), die Wälzkörper (54) und den Innenring (52) eines Wälzlagers handelt.

8. Verfahren nach Anspruch 7, **dadurch gekennzeichnet, daß**
   dem Außenring (50) und/oder dem Innenring (52)
   jeweils ein Periodenformfilter (56, 58) zur Separation von periodischen Signalanteilen aus einem Signal, mit einem Eingang (10) für das Signal, der einen rotierenden Ringspeicher (14; 301, 302, 303) speist, der von zyklisch angeordneten Speicherelementen (16) gebildet wird, die entsprechend der Rotationsfrequenz nacheinander jeweils mit dem Eingang verbunden werden, und einer Synchronisierungseinrichtung (20), um die Rotationsfrequenz mit der Periodendauer der gesuchten Signalanteile zur Übereinstimmung zu bringen,

sowie optional den Wälzkörpern (54) gemeinsam jeweils mindestens ein Periodenformfilter (60)

zur Separation von periodischen Signalanteilen aus einem Signal, mit einem Eingang (10) für das Signal, der einen rotierenden Ringspeicher (14; 301, 302, 303) speist, der von zyklisch angeordneten Speicherelementen (16) gebildet wird, die entsprechend der Rotationsfrequenz nacheinander jeweils mit dem Eingang verbunden werden, und einer Synchronisierungseinrichtung (20), um die Rotationsfrequenz mit der Periodendauer der gesuchten Signalanteile zur Übereinstimmung zu bringen, zugeordnet ist, wobei die Rotationsfrequenzen der Ringspeicher der Außenringüberrollfrequenz, der Innenringüberrollfrequenz bzw. der Wälzkörperüberrollfrequenz entsprechen.

9. Verfahren nach Anspruch 8, **dadurch gekennzeichnet, daß** das Ausgangssignal der jeweils anderen Periodenformfilter von dem Signal abgezogen wird, bevor es dem jeweiligen Periodenformfilter als Eingangssignal zugeführt wird.

10. Verfahren nach Anspruch 8 oder 9, **dadurch gekennzeichnet, daß** ein weiteres Periodenformfilter auf die Drehzahl der Welle synchronisiert wird und sein Ausgangssignal von dem Signal abgezogen wird, bevor es den anderen Periodenformfiltem (56, 58, 60) als Eingangssignal zugeführt wird.

11. Verfahren nach Anspruch 8 bis 10, **dadurch gekennzeichnet, daß** das Signal aufbereitet wird, bevor es den Periodenformfiltem (56, 58, 60) als Eingangssignal zugeführt wird.

12. Verfahren nach Anspruch 11, **dadurch gekennzeichnet, daß** das Signal mit einem Bandpaßfilter (66) gefiltert wird, der so eingestellt wird, daß das Ausgangssignal des Periodenformfilters (56) für den Innenring (52) maximal wird.

13. Verfahren nach Anspruch 11, **dadurch gekennzeichnet, daß** aus einem dynamischen Modell des eingebauten Wälzlagers die Übertragungsfunktion zwischen einer von dem Schaden verursachten Wälzkörperauslenkung und dem entsprechenden Sensorsignal ermittelt wird und das Signal mit einem entsprechenden Bandpaß bezüglich dieser Übertragungsfunktion korrigiert wird, bevor es den Periodenformfiltern zugeführt wird.

14. Verfahren nach Anspruch 13, **dadurch gekennzeichnet, daß** dem Außenringperiodenformfilter (56) und dem Innenringperiodenformfilter (58) jeweils ein unterschiedlicher Bandpaß vorgeschaltet ist, welcher jeweils die Übertragungsfunktion für ein von einem Kontakt zwischen dem Außenring (50) und einem Wälzkörper (54) herrührendes Schadenssignal bzw. die Übertragungsfunktion für ein von einem Kontakt zwischen dem Innenring (52) und einem Wälzkörper (54) herrührendes Schadenssignal korrigiert.

15. Verfahren nach Anspruch 14, **dadurch gekennzeichnet, daß** zwei Periodenformfilter (60) für die Wälzkörper (54) vorgesehen sind, denen jeweils einer der beiden Bandpaßfilter mit unterschiedlicher Übertragungsfunktion vorgeschaltet sind.

16. Verfahren nach Anspruch 8 bis 15, **dadurch gekennzeichnet, daß** ein Periodenformfilter (70) vorgesehen ist, dessen Ringspeicher mit der Käfig-Rotationsfrequenz rotiert und dem das Ausgangssignal des Außenring-Periodenformfilters (56) und ggfs. des Wälzkörper-Periodenformfilters (60) zugeführt werden.

17. Verfahren nach Anspruch 8 bis 16, **dadurch gekennzeichnet, daß** die zeitliche Veränderung des Inhalts des Ringspeichers der Periodenformfilter (56, 58, 60) für den Außenring (50), Innenring (52) bzw. die Wälzkörper (54) analysiert wird, um eine auf das Lager wirkende Unwucht bzw. Gleichlast zu ermitteln.

18. Verfahren nach Anspruch 17, **dadurch gekennzeichnet, daß** die Summe aus Gleichlast und Unwucht ermittelt wird, indem bei dem Ausgangssignal des Wälzkörper-Periodenformfilters (60) das Verhältnis zwischen den Amplituden der von dem Innenringkontakt und dem Außenringkontakt herrührenden Signalanteile gebildet wird.

19. Verfahren nach Anspruch 8 bis 18, **dadurch gekennzeichnet, daß** aus der Rotationsfrequenz der Periodenformfilter (56, 58, 60) für den Außenring (50), den Innenring (52) und/oder die Wälzkörper (54) der Kontaktwinkel des Wälzlagers ermittelt wird.

20. Verfahren nach Anspruch 7, **dadurch gekennzeichnet, daß** jedem Wälzkörper ein Periodenformfilter (216) zur Separation von periodischen Signalanteilen aus einem Signal, mit einem Eingang (10) für das Signal, der einen rotierenden Ringspeicher (14; 301, 302, 303) speist, der von zyklisch angeordneten Speicherelementen (16) gebildet wird, die entsprechend der Rotatationsfrequenz nacheinander jeweils mit dem Eingang verbunden werden, und einer Synchronisierungseinrichtung (20), um die Rotationsfrequenz mit der Periodendauer der gesuchten Signalanteile zur Übereinstimmung zu bringen, zugeordnet ist.

21. Verfahren nach Anspruch 1 bis 5, **dadurch gekennzeichnet, daß** es sich bei den Maschinenelementen um mit unterschiedlicher Drehzahl rotierende bzw. umlaufende Elemente (70, 72, 74) eines Getriebes handelt.

22. Verfahren nach Anspruch 21, **dadurch gekennzeichnet, daß** jedem solchen Getriebeelement (70, 72, 74) ein Periodenformfilter (76, 78, 80) zur Separation von periodischen Signalanteilen aus einem Signal, mit einem Eingang (10) für das Signal, der einen rotierenden Ringspeicher (14; 301, 302, 303) speist, der von zyklisch angeordneten Speicherelementen (16) gebildet wird, die entsprechend der Rotatationsfrequenz nacheinander jeweils mit dem Eingang verbunden werden, und einer Synchronisierungseinrichtung (20), um die Rotationsfrequenz mit der Periodendauer der gesuchten Signalanteile zur Übereinstimmung zu bringen, zugeordnet ist, dessen Ringspeicher mit der Dreh- bzw. Umlauffrequenz des zugeordneten Getriebeelements rotiert.

23. Verfahren nach Anspruch 1 bis 5, **dadurch gekennzeichnet, daß** es sich bei den Maschinenelementen um rotierende Walzen (90, 92, 94, 96, 98, 100) zur kontinuierlichen Herstellung eines Produkts (102) handelt, welche die Oberfläche des Produkts prägen.

24. Verfahren nach Anspruch 23, **dadurch gekennzeichnet, daß** das Signal aus dem Profil des Produkts (102) in Vorschubrichtung gewonnen wird, wobei jeder Walze (90, 92, 94, 96, 98, 100) ein Periodenformfilter (108, 110, 112, 114, 116, 118) zugeordnet ist

25. Verfahren nach Anspruch 24, **dadurch gekennzeichnet, daß** die Vorschubgeschwindigkeit des Produkts (102) erfaßt und zur Synchronisierung der Periodenformfilter (108, 110, 112, 114, 116, 118) verwendet wird.

26. Verfahren nach Anspruch 8, **dadurch gekennzeichnet, daß** die Güte des Periodenformfilters (60) fiir die Wälzkörper (54) so eingestellt wird, daß es innerhalb eines Käfigumlaufs einschwingt.

27. Verfahren nach Anspruch 26, **dadurch gekennzeichnet, daß** die Zeitkonstante des Periodenformfilters (60) für die Wälzkörper (54) als

$$\text{Käfigumlaufdauer} * \text{Lastwinkel} / 360°$$

gewählt wird.

28. Verfahren nach Anspruch 26 oder 27, **dadurch gekennzeichnet, daß** bei jedem Umlauf des Käfigs ein Abbild des Inhalts des Ringspeichers erzeugt wird, wenn der Ausgang maximal ist.

29. Verfahren nach Anspruch 28, **dadurch gekennzeichnet, daß** der Ringspeicher nach jedem Umlauf rückgesetzt wird und aus dem Vergleich verschiedener Abbilder die hasenverschiebung zwischen den verschiedenen Abbildern und somit der Schlupfwinkel der Wälzkörper (54) ermittelt wird.

30. Verfahren nach Anspruch 29, **dadurch gekennzeichnet, daß** die Phasenverschiebung aus dem Maximum der Ringkorrelation zwischen den einzelnen Abbildern ermittelt wird.

31. Verfahren nach Anspruch 29 oder 30, **dadurch gekennzeichnet, daß** die einzelnen Abbilder hinsichtlich ihrer Phasenverschiebung korrigiert werden und dann addiert werden, um den Ausgang des Periodenformfilters (60) zu bilden.

32. Verfahren nach Anspruch 26 oder 27, **dadurch gekennzeichnet, daß** die Phase der Rotation des Ringspeichers des Periodenformfilters (60) für die Wälzkörper (54) entsprechend des ermittelten Schlupfwinkels der Wälzkörper gesteuert wird, um den Wälzkörperschlupf zu kompensieren.

33. Verfahren nach Anspruch 8, **dadurch gekennzeichnet, daß** das Ausgangssignal des bzw. jeden Periodenformfilters (56, 58, 60) nach seiner Amplitude sortiert wird.

34. Verfahren nach Anspruch 33, **dadurch gekennzeichnet, daß** aus dem amplitudensortierten Signal die Schadenslänge für den Außenring (50), den Innenring (52) bzw. Wälzkörper (54) ermittelt wird.

35. Verfahren nach Anspruch 3, **dadurch gekennzeichnet, daß** es sich bei dem Signal um ein amplitudenmoduliertes Rauschsignal und bei der Periode um die Modulationsperiode des Rauschsignals handelt.

36. Verfahren nach Anspruch 35, **dadurch gekennzeichnet, daß** es sich bei dem Maschinenelement um ein Wälzlager handelt, wobei die Rauschssignalanteile, die mit der Außenringüberrollfrequenz und/oder der Käfigumlaufperiode amplitudenmoduliert sind, separiert werden, um daraus Informationen bzgl. des Lagerspiels zu abzuleiten.

37. Verfahren nach Anspruch 36, **dadurch gekennzeichnet, daß** die Modulationstiefe zur Bewertung des Lagerspiels herangezogen wird.


**Claims**

1. Method for determining damage to at least one cyclically moving machine element (50, 52, 54), a signal caused by the movement being picked up by a sensor (62), at least one component with an adjustable period being separated from the signal, and the remaining part of the signal being subjected to damage analysis, **characterized in that** in order to separate periodic signal components the signal is fed as input signal to a rotating ring memory (14; 301, 302, 303) which is formed by cyclically arranged memory elements (16) to which there is applied sequentially the input signal respectively currently present at the input (10) of the ring memory, the rotational frequency of which ring memory is synchronized with the period of the wanted signal components, and the wanted signal components are obtained as an output signal of the ring memory.

2. Method according to Claim 1, **characterized in that** the period is the period of revolution of a shaft driving the machine element.

3. Method for determining damage to at least one cyclically moving machine element (50, 52, 54) and a signal caused by the movement being picked up by a sensor (62), at least one component with an adjustable period being separated from the signal, which component is subjected to damage analysis, in which in order to separate periodic signal components the signal is fed as input signal to a rotating ring memory (14; 301, 302, 303) which is formed by cyclically arranged memory elements (16) to which there is applied sequentially the input signal respectively currently present at the input (10) of the ring memory, the rotational frequency of which ring memory is synchronized with the period of the wanted signal components, and the wanted signal components are obtained as an output signal of the ring memory.

4. Method according to Claim 3, **characterized in that** the at least one machine element (50, 52, 54) rotates, and the signal is an oscillation signal.

5. Method according to Claim 3 or 4, **characterized in that** the damage analysis is undertaken in the time domain of the separated signal component.

6. Apparatus for determining damage to at least one cyclically moving machine element (50, 52, 54), having a device (56, 58, 60) for separating a component with an adjustable period from a signal caused by the movement and picked up by a sensor (62), and a device for analysing the separated and/or the remaining part of the signal, in which the separation is performed by means of a period form filter (56, 58, 60) for separating periodic signal components from a signal, having an input (10) for the signal, which feeds a rotating ring memory (14; 301, 302, 303) which is formed by cyclically arranged memory elements (16) which are sequentially respectively connected in accordance with the rotational frequency to the input, and a synchronization device (20) in order to synchronize the rotational frequency with the period of the wanted signal components.

7. Method according to Claims 1 to 5, **characterized in that** the machine elements are the outer ring (50), the rolling bodies (54) and the inner ring (52) of a roller bearing.

8. Method according to Claim 7, **characterized in that** the outer ring (50) and/or the inner ring (52) are/is respectively assigned a period form filter (56, 58) for separating periodic signal components from a signal, having an input (10) for the signal, which feeds a rotating ring memory (14; 301, 302, 303) which is formed by cyclically arranged memory elements (16) which are sequentially respectively connected in accordance with the rotational frequency to the input, and a synchronization device (20) in order to synchronize the rotational frequency with the period of the wanted signal components and optionally the rolling bodies (54) are together respectively assigned at least one period form filter (60) for separating periodic signal components from a signal, having an input (10) for the signal, which feeds a rotating ring memory (14; 301, 302, 303) which is formed by cyclically arranged memory elements (16) which are sequentially respectively connected in accordance with the rotational frequency to the input, and a synchronization device (20) in order to synchronize the rotational frequency with the period of the wanted signal components, the rotational frequencies of the ring memories corresponding to the outer ring rollover frequency, the inner ring rollover frequency or the rolling body rollover frequency.

9. Method according to Claim 8, **characterized in that** the output signal of the respective other period form filter is subtracted from the signal before it is fed to the respective period form filter as input signal.

10. Method according to Claim 8 or 9, **characterized in that** a further period form filter is synchronized with the rotational speed of the shaft, and its output signal is subtracted from the signal before it is fed to the other period form filters (56, 58, 60) as input signal.

11. Method according to Claims 8 to 10, **characterized in that** the signal is conditioned before it is fed to the period form filters (56, 58, 60) as input signal.

12. Method according to Claim 11, **characterized in that** the signal is filtered with a bandpass filter (66) which is adjusted so as to maximize the output signal of the period form filter (56) for the inner ring (52).

13. Method according to Claim 11, **characterized in that** the transfer function between a rolling body deflection caused by the damage and the corresponding sensor signal is determined from a dynamic model of the installed roller bearing, and the signal is corrected with a corresponding bandpass with reference to this transfer function before it is fed to the period form filters.

14. Method according to Claim 13, **characterized in that** upstream of the outer ring period form filter (56) and the inner ring period form filter (58) is a respective different bandpass which respectively corrects the transfer function for a damage signal originating from a contact between the outer ring (50) and a rolling body (54), or corrects the transfer function for a damage signal originating from a contact between the inner ring (52) and a rolling body (54).

15. Method according to Claim 14, **characterized in that** two period form filters (60) are provided for the rolling body (54) upstream of which there are respectively placed one of the two bandpass filters with different transfer function.

16. Method according to Claims 8 to 15, **characterized in that** a period form filter (70) is provided whose ring memory rotates with the cage rotational frequency, and which is fed the output signal of the outer ring period form filter (56) and, if appropriate, of the rolling body period form filter (60).

17. Method according to Claims 8 to 16, **characterized in that** the temporal variation in the contents of the ring memory of the period form filters (56, 58, 60) for the outer ring (50), inner ring (52) and the rolling bodies (54) is analysed in order to determine an unbalance or steady load acting on the bearing.

18. Method according to Claim 17, **characterized in that** the sum of steady load and unbalance is determined by forming for the output signal of the rolling body period form filter (60) the ratio between the amplitudes of the signal components originating from the inner ring contact and the outer ring contact.

19. Method according to Claims 8 to 18, **characterized in that** the contact angle of the roller bearing is determined from the rotational frequency of the period form filters (56, 58, 60) for the outer ring (50), the inner ring (52) and/or the rolling bodies (54).

20. Method according to Claim 7, **characterized in that** each rolling body is assigned a period form filter (216) for separating periodic signal components from a signal, having an input (10) for the signal, which feeds a rotating ring memory (14; 301, 302, 303) which is formed by cyclically arranged memory elements (16) which are sequentially respectively connected in accordance with the rotational frequency to the input, and a synchronization device (20) in order to synchronize the rotational frequency with the period of the wanted signal components.

21. Method according to Claims 1 to 5, **characterized in that** the machine elements are elements (70, 72, 74) of a gearbox which are rotating or revolving at different rotational speeds.

22. Method according to Claim 21, **characterized in that** each such gearbox element (70, 72, 74) is assigned a period form filter (76, 78, 80) for separating periodic signal components from a signal, having an input (10) for the signal, which feeds a rotating ring memory (14; 301, 302, 303) which is formed by cyclically arranged memory elements (16) which are sequentially respectively connected in accordance with the rotational frequency to the input, and a synchronization device (20) in order to synchronize the rotational frequency with the period of the wanted signal components, the ring memory of which rotates with the rotational or revolving frequency of the assigned gearbox element.

23. Method according to Claims 1 to 5, **characterized in that** the machine elements are rotating rollers (90, 92, 94, 96, 98, 100) for the continued production of a product (102) which stamp the surface of the product.

24. Method according to Claim 23, **characterized in that** the signal is obtained from the profile of the product (102) in the feed direction, each roller (90, 92, 94, 96, 98, 100) being assigned a period form filter (108, 110, 112, 114, 116, 118).

25. Method according to Claim 24, **characterized in that** the feed rate of the product (102) is acquired and use to synchronize the period form filters (108, 110, 112, 114, 116, 118).

26. Method according to Claim 8, **characterized in that** the quality of the period form filter (60) is set for the rolling bodies (54) so that said filter settles within a cage revolution.

27. Method according to Claim 26, **characterized in that** the time constant of the period form filter (60) for the rolling bodies (54) is selected as

```
cage revolution period * load angle/360°.
```

28. Method according to Claim 26 or 27, **characterized in that** an image of the contents of the ring memory is produced for each revolution of the cage when the output is maximal.

29. Method according to Claim 28, **characterized in that** the ring memory is reset after each revolution, and the phase shift between the various images, and thus the slip angle of the rolling bodies (54), are determined from the comparison of various images.

30. Method according to Claim 29, **characterized in that** the phase shift is determined from the maximum in the ring correlation between the individual images.

31. Method according to Claim 29 or 30, **characterized in that** the individual images are corrected with regard to their phase shift and then added in order to form the output of the period form filter (60).

32. Method according to Claim 26 or 27, **characterized in that** the phase of the rotation of the ring memory of the period form filter (60) for the rolling bodies (54) is controlled in accordance with the determined slip angle of the rolling bodies in order to compensate the rolling body slip.

33. Method according to Claim 8, **characterized in that** the output signal of the or each period form filter (56, 58, 60) is sorted by its amplitude.

34. Method according to Claim 33, **characterized in that** the damage length for the outer ring (50), the inner ring (52) or rolling body (54) is determined from the amplitude-sorted signal.

35. Method according to Claim 3, **characterized in that** the signal is an amplitude-modulated noise signal, and the period is the modulation period of the noise signal.

**36.** Method according to Claim 35, **characterized in that** the machine element is a roller bearing, the noise signal components which are amplitude-modulated with the outer ring rollover frequency and/or the cage revolution period being separated in order therefrom to derive information relating to the bearing play.

**37.** Method according to Claim 36, **characterized in that** the modulation depth is used to evaluate the bearing play.


**Revendications**

**1.** Procédé de détermination de dommages sur au moins un élément de machine (50, 52, 54) se déplaçant cycliquement, dans lequel un signal provoqué par le déplacement est reçu par un détecteur (62), au moins une partie de période ajustable est séparée du signal, la partie restante du signal subissant une analyse de dommages, **caractérisé en ce que** pour séparer les parties périodiques du signal, le signal est apporté en tant que signal d'entrée à une mémoire annulaire tournante (14; 301, 302, 303) qui est formée d'éléments de mémoire (16) qui sont disposés cycliquement, qui reçoivent successivement le signal d'entrée appliqué à tout instant à l'entrée (10) de la mémoire annulaire et dont la fréquence de rotation est amenée à correspondre à la durée de la période des parties étudiées du signal, les parties étudiées du signal étant obtenues en tant que signal de sortie de la mémoire annulaire.

**2.** Procédé selon la revendication 1, **caractérisé en ce que** la période est la période de rotation d'un arbre qui entraîne l'élément de machine.

**3.** Procédé de détermination de dommages sur au moins un élément de machine (50, 52, 54) se déplaçant cycliquement, dans lequel un signal provoqué par le déplacement est reçu par un détecteur (62), au moins une partie de période ajustable est séparée du signal et subit une analyse de dommages, **caractérisé en ce que** pour séparer les parties périodiques du signal, le signal est apporté en tant que signal d'entrée à une mémoire annulaire tournante (14; 301, 302, 303) qui est formée d'éléments de mémoire (16) qui sont disposés cycliquement, qui reçoivent successivement le signal d'entrée appliqué à tout instant à l'entrée (10) de la mémoire annulaire et dont la fréquence de rotation est amenée à correspondre à la durée de la période des parties étudiées du signal, les parties étudiées du signal étant obtenues en tant que signal de sortie de la mémoire annulaire.

**4.** Procédé selon la revendication 3, **caractérisé en ce que** le ou les éléments de machine (50, 52, 54) tournent et **en ce que** le signal est un signal de vibrations.

**5.** Procédé selon les revendications 3 ou 4, **caractérisé en ce que** l'analyse de dommages est réalisée dans la partie temporelle de la fraction séparée du signal.

**6.** Dispositif de détermination de dommages sur au moins un élément de machine (50, 52, 54) se déplaçant cycliquement, doté d'un dispositif (56, 58, 60) de séparation d'une fraction de période ajustable d'un signal provoqué par le déplacement et enregistré par un détecteur (62) et un dispositif d'analyse de la partie séparée et/ou de la partie restante du signal, la séparation étant réalisée au moyen d'un filtre (56, 58, 60) de forme de période qui assure la séparation de fraction périodique du signal d'un signal, avec une entrée (10) de signal qui alimente une mémoire annulaire tournante (14; 301, 302, 303) formée d'éléments (16) de mémoire disposés cycliquement qui sont reliés successivement à l'entrée en correspondance à la fréquence de rotation, et d'un dispositif de synchronisation (20) qui amène la fréquence de rotation à correspondre à la durée de la période des fractions étudiées du signal.

**7.** Procédé selon les revendications 1 à 5, **caractérisé en ce que** les éléments de machine sont la bague extérieure (50), les corps de roulement (54) et la bague intérieure (52) d'un palier de roulement.

**8.** Procédé selon la revendication 7, **caractérisé en ce qu'**un filtre respectif (56, 58) de formation de période est associé à la bague extérieure (50) et/ou à la bague intérieure (52) en vue de séparer des fractions périodiques d'un signal, les filtres présentant une entrée (10) de signal qui alimentent une mémoire annulaire tournante (14; 301, 302, 303) formée par des éléments de mémoire (16) disposés cycliquement qui sont reliés successivement à l'entrée en correspondance à la fréquence de rotation, et un dispositif de synchronisation (20) qui amène la fréquence de rotation à correspondre à la durée de la période des fractions étudiées du signal, et **en ce qu'**au moins un filtre commun de formation de période (60) est associé facultativement aux corps de roulement (54) pour séparer des fractions périodiques d'un signal, avec une entrée (10) de signal qui alimente une mémoire annulaire tournante (14; 301, 302, 303) formée par des éléments de mémoire (16) disposés cycliquement qui sont reliés successivement à l'entrée en correspondance à la fréquence de rotation, et un dispositif de synchronisation (20) qui amène la fréquence de rotation à correspondre à la durée de la période des fractions étudiées du signal,

les fréquences de rotation de la mémoire annulaire correspondant à la fréquence de roulement de la bague extérieure, la fréquence de roulement de la bague intérieure ou à la fréquence de roulement des corps de roulement.

9. Procédé selon la revendication 8, **caractérisé en ce que** le signal de sortie de chaque autre filtre de formation de période est extrait du signal avant d'être apporté en tant que signal d'entrée au filtre correspondant de formation de période.

10. Procédé selon les revendications 8 ou 9, **caractérisé en ce qu'**un autre filtre de formation de période est synchronisé sur la vitesse de rotation de l'arbre et **en ce que** son signal de sortie est extrait du signal avant d'être apporté en tant que signal d'entrée aux autres filtres (56, 58, 60) de formation de période.

11. Procédé selon les revendications 8 à 10, **caractérisé en ce que** le signal est préparé avant d'être apporté en tant que signal d'entrée aux filtres (56, 58, 60) de formation de période.

12. Procédé selon la revendication 11, **caractérisé en ce que** le signal est filtré à l'aide d'un filtre passe-bande (66) réglé de telle sorte que le signal de sortie du filtre (56) de formation de période soit maximum pour la bague intérieure (52).

13. Procédé selon la revendication 11, **caractérisé en ce que** la fonction de transfert entre une déformation des corps de roulement provoquée par le dommage et le signal correspondant du détecteur est déterminée à partir d'un modèle dynamique du palier de roulement monté et **en ce que** le signal est corrigé avec une bande passante qui correspond à cette fonction de transfert avant d'être amené aux filtres de formation de période.

14. Procédé selon la revendication 13, **caractérisé en ce que** des bandes passantes différentes qui corrigent chacune la fonction de transfert pour un signal de dommage découlant d'un contact entre la bague extérieure (50) et un corps de roulement (54) ou qui corrigent la fonction de transfert pour un signal de dommage provoqué par un contact entre la bague intérieure (52) et les corps de roulement (54) est raccordé en amont du filtre (56) de formation de période de la bague extérieure et du filtre (58) de formation de période de la bague intérieure.

15. Procédé selon la revendication 14, **caractérisé en ce que** deux filtres (60) de formation de période sont prévus pour les corps de roulement (54), l'un des deux filtres passe-bande, présentant une fonction de transfert différente, étant raccordé en amont de ces filtres de formation de période.

16. Procédé selon les revendications 8 à 15, **caractérisé en ce qu'**il présente un filtre (70) de formation de période dont la mémoire annulaire tourne à la fréquence de rotation de la cage et auquel le signal de sortie du filtre (56) de formation de période de la bague extérieure et éventuellement du filtre (60) de formation de période des corps de roulement est apporté.

17. Procédé selon les revendications 8 à 16, **caractérisé en ce que** la modification temporelle du contenu de la mémoire annulaire des filtres (56, 58, 60) de formation de période de la bague extérieure (50), de la bague intérieure (52) et des corps de roulement (54) est analysée pour déterminer un balourd ou une charge uniforme qui agit sur le palier.

18. Procédé selon la revendication 17, **caractérisé en ce que** la somme de la charge uniforme et du balourd est déterminée en formant pour le signal de sortie du filtre (60) de formation de période des corps de roulement le rapport entre les amplitudes des fractions du signal provoquées par le contact avec la bague intérieure et le contact avec la bague extérieure.

19. Procédé selon les revendications 8 à 18, **caractérisé en ce que** l'angle de contact du palier de roulement est déterminé à partir de la fréquence de rotation des filtres (56, 58, 60) de formation de période de la bague extérieure (50), de la bague intérieure (52) et/ou des corps de roulement (54).

20. Procédé selon la revendication 7, **caractérisé en ce qu'**un filtre (216) de formation de période est associé à chaque corps de roulement pour séparer les fractions périodiques d'un signal, avec une entrée (10) de signal qui alimente une mémoire annulaire rotative (14; 301, 302, 303) formée par des éléments de mémoire (16) disposés cycliquement, et reliées successivement à l'entrée en correspondance à la fréquence de rotation, et un dispositif de synchronisation (20) qui amène la fréquence de rotation à correspondre à la durée de la période des fractions étudiées du signal.

21. Procédé selon les revendications 1 à 5, **caractérisé en ce que** les éléments de machine sont des éléments (70, 72, 74) tournant ou se déplaçant périphériquement à différentes vitesses de rotation d'une transmission.

22. Procédé selon la revendication 21, **caractérisé en ce qu'**un filtre (76, 78, 80) de formation de période est associé à chacun de ces éléments de transmission (70, 72, 74) pour séparer des fractions périodiques d'un signal, avec une entrée (10) de signal qui alimente une mémoire annulaire rotative (14; 301, 302, 303) formée par des éléments de mémoire (16) disposés cycliquement, et reliées successivement à l'entrée en correspondance à la fréquence de rotation, et un dispositif de synchronisation (20) qui amène la fréquence de rotation à correspondre à la durée de la période des fractions étudiées du signal, et dont la mémoire annulaire tourne à la fréquence de rotation de l'élément de transmission associé.

23. Procédé selon les revendications 1 à 5, **caractérisé en ce que** les éléments de machine sont des arbres rotatifs (90, 92, 94, 96, 98, 100) qui fabriquent un produit (102) en continu et qui impriment la surface du produit.

24. Procédé selon la revendication 23, **caractérisé en ce que** le signal est obtenu à partir du profil du produit (102) dans la direction d'avancement, un filtre (108, 110, 112, 114, 116, 118) de formation de période étant associé à chaque cylindre (90, 92, 94, 96, 98, 100).

25. Procédé selon la revendication 24, **caractérisé en ce que** la vitesse d'avancement du produit (102) est saisie et est utilisée pour synchroniser les filtres (108, 110, 112, 114, 116, 118) de formation de période.

26. Procédé selon la revendication 8, **caractérisé en ce que** la qualité du filtre (60) de formation de période prévu pour les corps de roulement (54) est ajustée de telle sorte qu'il s'accorde à une rotation de la cage.

27. Procédé selon la revendication 26, **caractérisé en ce que** la constante de temps du filtre (60) de formation de période des corps de roulement (54) est sélectionnée comme

```
durée d'une rotation de la cage*angle de charge/360°.
```

28. Procédé selon les revendications 26 ou 27, **caractérisé en ce que** lors de chaque rotation de la cage, une image du contenu de la mémoire annulaire est formée lorsque la sortie est maximale.

29. Procédé selon la revendication 28, **caractérisé en ce qu'**après chaque rotation, la mémoire annulaire est reculée d'un pas et **en ce que** le déphasage entre les différentes images et donc l'angle de glissement des corps de roulement (54) sont déterminés à partir de la comparaison des différentes images.

30. Procédé selon la revendication 29, **caractérisé en ce que** le déphasage est déterminé à partir du maximum de corrélation annulaire entre les différentes images.

31. Procédé selon les revendications 29 ou 30, **caractérisé en ce que** les différentes images sont corrigées en termes de déphasage et sont ensuite additionnées pour former la sortie du filtre (60) de formation de période.

32. Procédé selon les revendications 26 ou 27, **caractérisé en ce que** la phase de la rotation de la mémoire annulaire du filtre (60) de formation de période des corps de roulement (54) est commandé en fonction de l'angle de glissement déterminé pour les corps de roulement, pour compenser le glissement des corps de roulement.

33. Procédé selon la revendication 8, **caractérisé en ce que** le signal de sortie du filtre (56, 58, 60) de formation de période ou de chacun de ces filtres est trié en fonction de son amplitude.

34. Procédé selon la revendication 33, **caractérisé en ce que** la longueur des dommages sur la bague extérieure (50), la bague intérieure (52) ou les corps de roulement (54) est déterminée à partir du signal trié en amplitude.

**35.** Procédé selon la revendication 3, **caractérisé en ce que** le signal est un signal de bruit modulé en amplitude et **en ce que** la période est la période de modulation du signal de bruit.

**36.** Procédé selon la revendication 35, **caractérisé en ce que** l'élément de machine est un palier de roulement, les fractions du signal de bruit qui sont modulées en amplitude à la fréquence de roulement de la bague extérieure et/ou à la période de rotation de la cage sont séparées pour en dériver des informations concernant le jeu du palier.

**37.** Procédé selon la revendication 36, **caractérisé en ce que** la profondeur de modulation est utilisée pour évaluer le jeu du palier.

Fig. 1

Fig. 3

Fig. 2

Wälzkörperschadensperiode

Max A

Wälzkörperschadensform

Max I

50%
Kontakt am Innenring

## Fig. 4

Häufigkeits
verteilung

Schadenslänge %          Gutlänge %

## Fig. 5

86

84

Signalaufbereitung

Sensor

76

PFF 1

70

78

PFF 2

80

PFF 3

72

evtl.Trigger

74

## Fig.6

82

90

94

98

104

100m/U

30m/U

1m/U

102

106

90m/U

25m/U

2m/U

100

Fehlererkennung

92

96

Max
hold

Max
hold

Max
hold

Max
hold

Max
hold

Reset

Reset

Reset

Reset

Reset

/2

/2

/2

/2

/2

## Fig.7

118

116

114

112

110

108

122

120

## Fig. 8

## Fig. 9

304

303

302

301

Z1 = N+1
Z2 = N
Z3 = N-1

# Fig. 10

Eingang

300

A1
A2
A3

Max(A1,A2,A3)

Ausgang

306

305

| Zeitbasis | | .... ms | +...% | | |
|---|---|---|---|---|---|
| 0 | | | | | |
| 10 | | | | | |
| 20 | | | | | |
| 30 | | | | | |
| 40 | | | | | |
| 50 | | | | | |
| % | 0 | 2 | 4 | 6 | 8 |

Kanal A Man- Auto

# Fig. 11

Fig. 12

Fig. 13

Fig. 14

302    303

301

310

PFF

N+1
N
N-1

Sensor → Signal vorverarbeitung

fs

A1
A2
A3
Max(A1,A2,A3) → Ausgang

Synchronisierung

Fig. 15

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4007630 A
- US 3554012 A
- DE 19702234 A1
- WO 9925921 A
- US 5109700 A
- US 4931949 A